# FASCICULE DE BREVET EUROPEEN

(11) **EP 1 968 734 B1**
(45) Date de publication et mention de la délivrance du brevet: **25.07.2012**
(21) Numéro de dépôt: 06806297.5
(22) Date de dépôt: 16.10.2006
(51) Int. Cl.: B01J 3/00, C08F 36/04, B01J 19/18, B01J 19/20, B01J 19/24

(54) **PROCEDE DE PREPARATION EN CONTINU D'UN SYSTEME CATALYTIQUE POUR POLYMERISER UN DIENE CONJUGUE, ET INSTALLATION POUR SA MISE EN OEUVRE**
VERFAHREN ZUR KONTINUIERLICHEN HERSTELLUNG EINES KATALYSATORSYSTEMS, DAS ZUR POLYMERISATION EINES KONJUGIERTEN DIENS VERWENDET WIRD, UND VORRICHTUNG DAFÜR
METHOD FOR THE CONTINUOUS PREPARATION OF A CATALYTIC SYSTEM THAT IS USED TO POLYMERISE A CONJUGATED DIENE AND INSTALLATION FOR IMPLEMENTING SAME

(30) Priorité: 19.10.2005 FR 0510796
(43) Date de publication de la demande: 17.09.2008
(73) Titulaire: Compagnie Générale des Etablissements Michelin, 63040 Clermont-Ferrand Cedex 09 (FR); Michelin Recherche et Technique S.A., 1463 Granges-Paccot (CH)
(72) Inventeur: PAROLA, Hélène, F-63400 Chamalières (FR); BARBOTIN, Fanny, F-63100 Clermont-Ferrand (FR); KIENER, Pierre, F-63360 Gerzat (FR); ANSELME, Bernard, F-63430 Pont du Chateau (FR); MARTINET, Fabrice, F-19100 Brive la Gaillarde (FR)
(74) Mandataire: Le Cam, Véronique Marie Christine
(86) Numéro de dépôt international: PCT/EP2006/009959
(87) Numéro de publication internationale: WO 2007/045417

(56) Documents cités:
- US-A- 4 699 960
- US-A1- 2004 009 870
- US-A1- 2004 019 171
- US-A1- 2005 130 835

## Description

La présente invention concerne un procédé de préparation en continu d'un système catalytique utilisable pour la polymérisation d'au moins un monomère diène conjugué, et une installation pour la mise en oeuvre de ce procédé.

Les documents de brevet WO-A-02/38636 et WO-A-03/097708 au nom des Demanderesses enseignent, pour la polymérisation de diènes conjugués, d'utiliser un système catalytique de type « préformé » à base d'au moins :
- un diène conjugué de préformation, tel que le butadiène,
- un sel d'un ou de plusieurs métaux de terre(s) rare(s) d'un acide phosphorique organique qui est en suspension dans au moins un solvant hydrocarboné inerte, saturé et de type aliphatique ou alicyclique, ce ou ces métaux de terre(s) rare(s) étant présent(s) dans ledit système catalytique selon une concentration par exemple sensiblement égale à 0,02 mol/l et de préférence allant de 0,01 à 0,06 mol/l,
- un agent d'alkylation constitué d'un alkylaluminium de formule AIR₃ ou HAIR₂, dans lesquelles R représente un radical alcoyle, préférentiellement de 1 à 8 atomes de carbone et H représente l'atome d'hydrogène, et
- un donneur d'halogène constitué d'un halogénure d'alkylaluminium.

Les systèmes catalytiques décrits dans ces documents sont préparés en discontinu, en mettant en oeuvre dans un même réacteur les étapes suivantes:
- dans une première étape, optionnelle, de solvatation, on réalise une suspension dudit sel de terre(s) rare(s) dans ledit solvant hydrocarboné inerte,
- dans une seconde étape, on ajoute le diène conjugué à la suspension obtenue à la première étape ou bien, dans le cas où la première étape n'a pas été mise en oeuvre, on ajoute ledit solvant audit sel en plus dudit diène conjugué,
- dans une troisième étape d'alkylation, on ajoute ledit agent d'alkylation à la suspension obtenue au terme de ladite seconde étape pour l'obtention d'un sel alkylé,
- dans une quatrième étape d'halogénation, on ajoute ledit donneur d'halogène audit sel alkylé donnant lieu à une réaction fortement exothermique de formation d'un pré-polymère dudit diène conjugué, puis
- dans une cinquième étape de vieillissement, on maintient pendant une à deux heures le mélange ainsi obtenu à une température constante d'environ 60° C, pour l'obtention du système catalytique préformé que l'on stocke typiquement à une température de -15° C.

Un inconvénient majeur de ce procédé de préparation en discontinu du système catalytique préformé est que, outre le temps de cycle de plusieurs heures qu'il requiert, si l'on souhaite augmenter la concentration finale de terre(s) rare(s) dans le système catalytique, on doit augmenter en rapport de cette dernière la concentration en diène conjugué de préformation, ce qui génère une exothermicité accrue et difficilement maîtrisable de l'étape de préformation pouvant nuire à l'activité du système catalytique, voire à la sécurité de l'installation.

Cette nécessité de prévoir un temps de cycle relativement long pour la synthèse de ce système catalytique et une concentration réduite de terre(s) rare(s) dans ledit système, afin de minimiser l'exothermicité précitée, conduit à réaliser cette synthèse dans un réacteur de volume relativement important.

Un autre inconvénient de ce procédé de synthèse en discontinu réside dans la difficulté d'atteindre une bonne reproductibilité des systèmes catalytiques obtenus dans des conditions déterminées, ainsi qu'un couplage optimal de ce procédé discontinu à une polymérisation mise en oeuvre en continu, par exemple pour l'obtention de polybutadiène ou de polyisoprène.

Le document de brevet US-A-2004/0116638 mentionne la possibilité de préparer en continu de tels systèmes catalytiques en mettant en contact dans une ligne d'alimentation d'un réacteur de polymérisation de diène conjugué, à une température allant de -20 à 80° C, le diène conjugué de préformation en solution avec l'agent d'alkylation, puis le produit d'alkylation ainsi obtenu avec le sel de terre(s) rare(s) puis enfin le donneur d'halogène, le système catalytique préformé en résultant, étant introduit dans le réacteur en continu dans un délai inférieur à 10 minutes à compter de l'addition du donneur d'halogène:

On notera que ce dernier document ne décrit pas, dans son unique exemple, la réalisation d'une telle synthèse en continu du système catalytique, mais décrit une synthèse de polydiènes dont la caractéristique essentielle consiste à maintenir dans le réacteur en continu un flot d'écoulement non idéal des constituants de manière à assurer que 10 % des constituants entrant dans le réacteur à un temps de référence donné sont présents dans le réacteur en continu à un temps t₁ qui est différent du temps de séjour initial.

Il existe un besoin pour disposer d'un procédé de préparation en continu d'un système catalytique à base de sels de métaux de terre(s) rare(s) pour la polymérisation d'au moins un diène conjugué et en particulier pour l'alimentation en continu d'un réacteur de polymérisation d'au moins un diène conjugué d'où le polymère est récupéré en continu.

Un but de la présente invention est de remédier aux inconvénients précités relatifs au procédé de préparation en discontinu du système catalytique préformé par la mise en oeuvre d'un procédé de préparation en continu d'un système catalytique pour la polymérisation, préférentiellement en continu, d'au moins un monomère diène conjugué, ledit système catalytique étant à base d'au moins :
- un diène conjugué de préformation,
- un sel d'un ou plusieurs métaux de terre(s) rare(s) (métaux ayant un numéro atomique compris entre 57 et 71 dans le tableau périodique des éléments de Mendeleev) d'un acide phosphorique organique, ledit sel étant en solution dans au moins un solvant hydrocarboné inerte et saturé de type aliphatique ou alicyclique,
- un agent d'alkylation comprenant un alkylaluminium de formule AIR₃ ou HAIR₂, dans lesquelles R représente un radical alcoyle, préférentiellement de 1 à 12 atomes de carbone et H représente l'atome d'hydrogène, et
- un donneur d'halogène comprenant un halogénure d'alkylaluminium et caractérisé en ce qu'il comprend successivement dans une ligne d'alimentation (L) d'un réacteur de polymérisation, préférentiellement opérant en continu,
   (i) la réaction dans un réacteur d'alkylation constitué par un ou plusieurs mélangeur(s) dynamique(s) de type parfaitement agité(s) dudit diène conjugué de préformation, de ladite solution de terre(s) rare(s) et dudit agent d'alkylation et la conduite de la réaction d'alkylation pendant un temps caractéristique minimal d'au moins 5 minutes, puis
   (ii) un ajout au produit de la réaction obtenue à l'étape d'alkylation (i) dudit donneur d'halogène pour la conduite d'une réaction d'halogénation-vieillissement du système catalytique préformé résultant de l'halogénation, pour l'obtention en continu dudit système catalytique préformé en sortie de ladite ligne (L).

Par produit de réaction, on entend, le mélange des constituants ou le produit de réaction des constituants ou un mélange des deux.

Dans le cadre du procédé en continu selon l'invention, la ligne (L) est la ligne d'alimentation de l'installation qui va d'un réacteur de mise en solution du sel de terre(s) rare(s) ou d'un réservoir de stockage de la solution de sel de terre(s) rare(s) jusqu'à l'entrée d'un réacteur de polymérisation, préférentiellement en continu, d'au moins un monomère de diène conjugué.

Le procédé en continu selon l'invention permet d'obtenir en sortie de ladite ligne (L) un système catalytique qui est à base dudit diène conjugué, dudit sel, dudit solvant, dudit agent d'alkylation et dudit donneur d'halogène, et qui est utilisable pour la polymérisation, préférentiellement en continu, dans une unité industrielle d'au moins un monomère diène conjugué avec une activité et des caractéristiques avantageuses de microstructure et de macrostructure des élastomères obtenus qui sont analogues à celles procurées par les systèmes catalytiques préformés synthétisés en discontinu selon les documents précités WO-A-02/38636 et WO-A-03/097708.

On notera que l'utilisation dans ce procédé selon l'invention, à titre de réacteur d'alkylation d'un ou plusieurs mélangeur(s) dynamique(s) de type parfaitement agité(s) permet de préparer en continu le système catalytique car il n'y a pas formation d'un « gel » incoercible susceptible de colmater le réacteur d'alkylation et/ou la ligne (L) et d'entraîner l'arrêt du procédé de préparation dudit système catalytique au bout de quelques heures ni même au bout de plusieurs jours ou mois.

On notera que ce procédé selon l'invention de synthèse en continu du système catalytique permet de maîtriser d'une manière satisfaisante l'exothermicité de l'étape précitée de préformation même dans le cas d'une concentration finale de terre(s) rare(s) relativement élevée dans le système catalytique, du fait que cette exothermicité peut être contrôlée dans un procédé continu par une meilleure répartition des échanges thermiques.

Ce procédé présente également l'avantage d'offrir un gain en flexibilité car le rapport agent d'alkylation / sel de terre(s) rare(s), directement corrélé à l'activité catalytique, peut être facilement varié. Il en est de même avec la possibilité de moduler à souhait le débit de sortie du système catalytique en sortie de ligne tout en restant dans la plage du temps de séjour qui convient à chacune des étapes d'alkylation et d'halogénation-vieillissement.

D'une manière générale, ce système catalytique comprend le(s)dit(s) métal ou métaux de terre(s) rare(s), tel que le néodyme, selon une concentration égale ou allant de 0,002 mol/l à 0,08 mol/l et de préférence allant de 0,02 mol/l à 0,07 mol/l.
En effet, des essais réalisés par les Demanderesses ont établi que, d'une manière surprenante, la concentration finale de métal de terre(s) rare(s) dans ledit système catalytique, tel que le néodyme, peut être avantageusement supérieure à 0,02 mol/l et, encore plus avantageusement, sensiblement égale à 0,04 mol/l. Le procédé de synthèse en continu selon l'invention permet la mise en oeuvre du procédé à des concentrations finales de métal de terre(s) rare(s) élevées qui sont modulables en fonction des paramètres à prendre en considération. Le procédé de synthèse en continu du système catalytique selon l'invention permet un réglage de la concentration en sel de terre(s) rare(s) et, en conséquence, de l'activité catalytique en fonction par exemple du niveau d'impuretés présents dans le solvant et/ou le(s) monomère(s).

On notera également que cette maîtrise de l'exothermicité lors du vieillissement, jointe au temps de synthèse relativement court qui caractérise la synthèse en continu du système catalytique selon l'invention, permet de réaliser cette synthèse dans des réacteurs de volumes relativement réduits, en comparaison des volumes utilisés à ce jour pour les réacteurs discontinus à capacité de production identique. L'investissement initial est donc moindre que celui d'une unité de synthèse du système catalytique en discontinu et les besoins en solvant sont eux aussi moins importants du fait d'une concentration plus importante du système catalytique. Une synthèse en continu étant du fait de son fonctionnement permanent largement plus productive qu'en discontinu, on comprend bien le gain en rentabilité que l'invention permet d'atteindre.

On notera également que cette synthèse en continu du système catalytique selon l'invention permet un réglage aisé de la température et du temps de contact entre les constituants avantageusement de la température et du temps caractéristique de l'étape d'alkylation et/ou de la température et/ou du temps de l'étape d'halogénation-vieillissement tout en assurant ainsi une bonne flexibilité de la mise en oeuvre du procédé de préparation en continu du système catalytique préformé selon l'invention.

On notera en outre que cette synthèse en continu selon l'invention permet d'assurer une bonne reproductibilité des caractéristiques des systèmes catalytiques obtenus dans des conditions déterminées et, par conséquent, de l'activité de ces derniers pour les polymérisations envisagées.

A titre de diène conjugué de préformation utilisable pour « préformer » ledit système catalytique, on peut citer le 1,3-butadiène, l'isoprène ou leur mélange et préférentiellement le 1, 3-butadiène.
On notera que le rapport molaire (monomère de préformation / sel de terre(s) rare(s)) peut présenter une valeur allant de 15 à 70.

Le sel de terre(s) rare(s) que l'on fait réagir avec le diène conjugué de préformation est utilisé sous forme d'une solution plus ou moins visqueuse et qui peut comporter de l'acide libre en fonction des conditions de préparation par ailleurs connues en soi.

Le sel de terre(s) rare(s) peut être préparé soit en continu, soit en discontinu comme décrit dans le document de brevet WO-A-02/38636, en vue de l'alimentation en continu de la ligne d'alimentation (L). Lorsque le sel d'un ou plusieurs métaux de terre(s) rare(s) se présente sous la forme d'une poudre non hygroscopique, le temps de solubilisation dans le solvant est variable en fonction des conditions de solubilisation utilisées.

Ainsi, selon un premier mode de réalisation, le sel de terre(s) rare(s) se présentant sous forme d'une poudre non hygroscopique ayant une légère tendance à s'agglomérer à la température ambiante est mis en solution dans un solvant hydrocarboné, inerte, aliphatique ou alicyclique de bas poids moléculaire, tel que le cyclohexane, le méthylcyclohexane, l'hexane pur ou sous forme de coupe de solvants aliphatique et alicyclique de point d'ébullition allant de 65°C à 72°C, le n-heptane, ou un mélange de ces solvants. A titre préférentiel, on utilise le méthylcyclohexane à titre de solvant hydrocarboné inerte.

Cette mise en solution du sel de terre(s) rare(s) peut être opérée en discontinu ou en continu, en dehors de la ligne (L) ou dans la ligne (L). Selon une variante d'exécution, la solution de sel de terre(s) rare(s) peut être diluée dans la ligne (L).

Selon un autre mode de réalisation préférentiel, comme par exemple décrit dans le document de brevet WO-A-00/64 910, le sel de terre(s) rare(s) mis à réagir est synthétisé « in situ » directement dans le solvant, c'est-à-dire que la réaction du dérivé de l'acide phosphorique avec le composé de métal de terre(s) rare(s) est réalisée en présence dudit solvant pour former le sel de terre(s) rare(s) dans ledit solvant, ledit sel se présentant sous forme d'une solution plus ou moins visqueuse qui contient le composé de la formule Nd(P)₃.x PH, dans laquelle x est un nombre, entier ou non, égal ou supérieur à 0, et PH représente un acide libre qui est un diester de l'acide phosphorique de formule [(RO)₂ (HO)P = 0] résultant de la synthèse « in situ ».

Selon ces deux modes de réalisation du sel de terre(s) rare(s), la concentration du sel de terre(s) rare(s) dans la solution visqueuse obtenue peut être très élevée, de l'ordre de 0,1 à 0,15 mol/l, c'est-à-dire supérieure à celle utilisée dans le système catalytique utilisé dans le procédé conforme à l'invention, qui peut aller de 0,002 mol/l à 0,08 mol/l. La concentration en sel de terre(s) rare(s) est ajustée comme connu en soi par dilution de la solution visqueuse dans un volume approprié supplémentaire de solvant(s) à différents niveaux de la ligne (L), à savoir notamment dans un réservoir de stockage de la solution visqueuse du sel de métal de terre(s) rare(s) ou avant ou après une pompe d'injection de la solution du sel de terre(s) rare(s) située en tête de la ligne (L) en amont du réacteur d'alkylation ou en un autre point de la ligne (L) situé en amont du réacteur d'alkylation.

Selon un autre mode de réalisation, la solution de métal de terre(s) rare(s) préparée selon le premier mode de réalisation peut contenir de l'acide libre de formule (RO)₂(HO)P = 0 qui est ajouté pendant ou postérieurement à la solubilisation du sel à l'état de poudre.

A titre de sels dudit ou desdits métaux de terre(s) rare(s) utilisables dans le procédé conforme à l'invention, on peut citer des organophosphates du néodyme, du cerium, du didyme et préférentiellement le tris [ditbutyl phosphate] de néodyme, le tris [dipentyl phosphate] de néodyme, le tris [dioctyl phosphate] de néodyme, le tris [bis (2-éthylhexyl) phosphate] de néodyme, le tris [bis (1-méthylheptyl) phosphate] de néodyme, le tris [bis (p-nonylphenyl) phosphate] de néodyme, le tris [butyl (2-éthylhexyl) phosphate] de néodyme, le tris [(1-méthylheptyl) (2-éthylhexyl) phosphate] de néodyme, le tris [(2-éthylhexyl) (p-nonylphényl) phosphate] de néodyme, le tris [bis (2-éthylhexyl) phosphate] de néodyme. On peut également utiliser, à titre de sel, un mélange de plusieurs sels d'un acide phosphorique organique d'un métal de terre(s) rare(s).

Selon un exemple préférentiel commun à ces modes de réalisation, on utilise à titre de sel un tris[bis(2-éthylhexyl)phosphate] dudit ou desdits métaux de terre(s) rare(s). A titre encore plus préférentiel, ledit sel de terre(s) rare(s) est le tris[bis(2-éthylhexyl)phosphate] de néodyme (Nd(P)₃ en abrégé ci-après).

Dans le procédé conforme à l'invention, lorsque le sel de terre(s) rare(s) est à l'état de poudre non hygroscopique, la réaction de mise en solution du sel de terre(s) rare(s) est effectuée dans un réacteur, en continu ou en discontinu, à une température allant de 10°C à 100°C, avantageusement de 20°C à 60°C et préférentiellement sensiblement égale à 30°C et pendant une durée allant de 15 minutes à 60 minutes et préférentiellement sensiblement égale à 30 minutes par introduction dans le réacteur du sel puis dudit ou desdits solvant(s).

A titre d'alkylaluminium répondant à la formule AIR₃ ou HAIR₂ utilisable pour constituer ledit agent d'alkylation dans l'étape (i) du procédé selon l'invention, on peut citer des alkylaluminiums tels que:
- des trialkylaluminiums, par exemple le triméthylaluminium, le triéthylaluminium, le tri-n-propylaluminium, le triisopropylaluminium, le tri-n-butylaluminium, le tri-t-butylaluminium, le triisobutylaluminium, le tri-n-pentylaluminium, le tri-n-hexylaluminium, le tri-n-octylaluminium, le tricyclohexylaluminium, ou
- des hydrures de dialkylaluminium, par exemple l'hydrure de diéthylaluminium, l'hydrure de diisopropylaluminium, l'hydrure de di-n-propylaluminium, l'hydrure de diisobutylaluminium, l'hydrure de di-n-octylaluminium, l'hydrure de di-n-butylaluminium.
   On notera que cet agent d'alkylation est de préférence constitué de l'hydrure de diisobutylaluminium (« HDiBA » en abrégé ci-après).
   On notera en outre que le rapport molaire (agent d'alkylation / sel de terre(s) rare(s)) utilisable dans le procédé de synthèse selon l'invention peut présenter aussi bien une valeur inférieure ou égale à 5 à l'instar du document précité WO-A-02/38636, par exemple dans le but d'obtenir des élastomères diéniques présentant des taux d'enchaînements cis-1,4 reproductibles et élevés, ou bien une valeur supérieure à 5 à l'instar du document précité WO A-03/097708. Selon une forme d'exécution, le rapport molaire agent d'alkylation / sel va de 1,3 à 15 et préférentiellement est égal à 2.

A titre d'halogénure d'alkylaluminium utilisable comme donneur d'halogène dans l'étape (ii) du procédé selon l'invention, on utilise de préférence un monohalogénure d'alkylaluminium tel que le chlorure de diéthylaluminium, le chlorure de n-propylaluminium, le chlorure de diisopropylaluminium, le chlorure de di-n-butylaluminium, le chlorure de diisobutylaluminium, le chlorure de di-n-octylaluminium, le chlorure de diphénylaluminium. On notera que cet halogénure d'alkylaluminium est de préférence le chlorure de diéthylaluminium (« CDEA » en abrégé ci-après).
Le rapport molaire (halogène / sel de terre(s) rare(s)) peut présenter une valeur allant de 2 à 3,5 et, de préférence, allant de 2,5 à 3.
Selon un mode particulièrement avantageux de réalisation de l'invention, on utilise en combinaison l'hydrure de diisobutylaluminium et le chlorure de diéthylaluminium à titre d'agent d'alkylation et de donneur d'halogène, respectivement.
On notera que les sesquihalogénures d'alkylaluminium, tels que les sesquichlorures d'éthylaluminium, ne sont pas utilisables dans les systèmes catalytiques selon l'invention, du fait qu'ils ne permettent pas d'obtenir des élastomères diéniques, tels que des polybutadiènes, présentant à la fois un indice de polydispersité inférieur à 2,1 et une viscosité Mooney ML(1+4) à 100° C égale ou supérieure à 40.

Le sel de terre(s) rare(s) en solution, le monomère de diène conjugué de préformation et l'agent d'alkylation sont introduits simultanément préférentiellement directement en totalité dans le réacteur d'alkylation. Cependant, selon une forme d'exécution de l'invention, seule une partie dudit monomère de préformation peut ou peuvent être introduit(s) directement dans le réacteur d'alkylation, l'autre partie étant introduite dans la ligne (L) en amont, soit dans le réacteur de mise en solution, soit dans le réservoir de stockage de la solution dudit diène conjugué de terre(s) rare(s), soit dans un mélangeur dynamique de type parfaitement agité.

Selon un mode de réalisation du procédé selon l'invention, préalablement à l'étape (i) d'alkylation, une partie de ladite solution de sel d'un ou plusieurs métaux de terre(s) rare(s), est mise en contact en continu ou en discontinu et sous agitation dans ladite ligne (L) avec une partie du diène conjugué de préformation à une température contrôlée allant de 10°C à 60°C. Dans le cas d'une mise en contact en discontinu, la durée de contact est de 15 minutes à 60 minutes, et préférentiellement sensiblement égale à 30 minutes.

Selon un mode d'exécution avantageux, la mise en contact en continu dans la ligne d'alimentation (L) d'un réacteur de polymérisation du sel en solution d'un ou plusieurs métaux de terre(s) rare(s) d'un acide phosphorique organique avec ledit diène conjugué de préformation est effectuée à une température contrôlée sensiblement égale à 30°C.

Selon une première variante d'exécution du procédé selon l'invention, préalablement à l'étape d'alkylation (i) précitée, la mise en contact précitée, en discontinu ou en continu, d'une partie du sel en solution d'un ou plusieurs métaux de terre(s) rare(s) d'un acide phosphorique organique avec une partie dudit diène conjugué de réformation est effectuée en entrée de ladite ligne (L) dans un réacteur de mise en solution du sel de terre(s) rare(s) dans le solvant.

Selon une seconde variante d'exécution du procédé selon l'invention, préalablement à l'étape d'alkylation (i) précitée, une partie du diène conjugué de préformation est ajouté en continu dans la ligne d'alimentation seule dans un mélangeur dynamique de type parfaitement agité, et de préférence à double enveloppe, disposé en amont du réacteur d'alkylation.

Selon une troisième variante d'exécution, une partie dudit diène de préformation peut être injectée dans la ligne (L) en partie à la fois dans le réacteur de mise en solution du sel de terre(s) rare(s) et dans ledit mélangeur dynamique de type parfaitement agité.

Selon une autre forme d'exécution de l'invention, antérieurement à l'étape (i), il y a une mise en solution de la totalité du sel de terre(s) rare(s), avec ledit ou lesdits solvant(s) dans un réacteur de mise en solution, puis une mise en contact dans le réacteur de mise en solution de ladite solution du sel de terre(s) rare(s) avec la totalité ou une partie du diène conjugué de préformation ou une mise en contact ultérieurement dans la ligne (L) de la solution de sel de terre(s) rare(s) évacuée du réacteur avec la totalité ou une partie du diène conjugué de préformation. Cette mise en contact dans la ligne (L) peut être réalisée dans un mélangeur dynamique de type parfaitement agité.

Avantageusement, l'étape (i) précitée comprend une mise en contact en continu et sous agitation dans un réacteur dit d'alkylation, constitué par un ou plusieurs, (n), mélangeur(s) dynamique(s) de type parfaitement agité(s), disposé(s) en série sur ladite ligne (L) du produit de réaction dudit diène conjugué de préformation, de ladite solution du sel de terre(s) rare(s) avec ledit agent d'alkylation, pour la réaction d'alkylation dudit sel, à une température contrôlée allant de 25°C à 80°C et préférentiellement sensiblement égale à 30° C et pendant une durée caractéristique minimale d'au moins 5 min. et qui, avantageusement, va de 10 min. à 60 min. et préférentiellement est sensiblement égale à 15 minutes.

Ledit agent d'alkylation est injecté directement en totalité dans le réacteur d'alkylation disposé sur la ligne. Cependant, selon une variante d'exécution, une partie dudit agent d'alkylation peut être injectée dans la ligne (L) juste avant le réacteur d'alkylation. Le temps caractéristique de séjour dudit agent d'alkylation dans le réacteur d'alkylation est réglable et réglé avant ajout du donneur d'halogène. On notera qu'une durée caractéristique minimale de 5 minutes pour cette étape d'alkylation est nécessaire pour la synthèse d'un système catalytique capable de conduire à un polymère ou copolymère ayant les caractéristiques avantageuses précitées.

Avantageusement, ledit procédé selon l'invention comprend, lors de l'étape (ii) précitée, une mise en contact en continu sous agitation dans un réacteur d'halogénation-vieillissement disposé sur ladite ligne (L) du produit de ladite réaction d'alkylation avec ledit donneur d'halogène, à une température contrôlée allant de 40°C à 80°C et préférentiellement sensiblement égale à 60° C et pendant une durée de préférence allant de 10 minutes à 2 heures, et préférentiellement sensiblement égale à 60 minutes, pour réaliser l'halogénation et le vieillissement du système catalytique préformé ainsi obtenu.

Ledit agent donneur d'halogène est injecté préférentiellement directement en totalité dans le réacteur d'halogénation-vieillissement ou dans le premier élément du réacteur d'halogénation-vieillissement lorsque celui-ci comporte plusieurs éléments placés en série. Selon une variante d'exécution, ledit agent donneur d'halogène peut être injecté en totalité ou en partie dans la ligne (L) juste avant le réacteur d'halogénation-vieillissement.

Le procédé de synthèse en continu selon l'invention permet indifféremment de stocker ledit système catalytique préformé en aval de ladite ligne à une température relativement basse, comprise dans une fourchette de valeurs allant de - 25°C jusqu'à 20°C, préférentiellement allant de -15°C à + 10°C ou de l'envoyer directement dans le réacteur de polymérisation d'au moins un monomère de diène conjugué.

A titre d'élastomère diénique pouvant être préparé au moyen dudit système catalytique synthétisé en continu par ledit procédé selon l'invention, on peut citer tout homopolymère ou copolymère obtenu par homopolymérisation ou copolymérisation d'au moins un monomère diène conjugué ayant de 4 à 12 atomes de carbone.

A titre de monomère(s) diène(s) conjugué(s) conviennent notamment le butadiène-1,3, l'isoprène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène ou un mélange de ces monomères et préférentiellement le butadiène-1,3 et l'isoprène.

Les élastomères peuvent être par exemple à blocs, statistiques, séquencés, microséquencés, et être préparés en dispersion ou en solution ou en milieu concentré. Les élastomères obtenus selon ce procédé sont stéréospécifiques et possèdent une teneur en liaisons cis-1,4 égale ou supérieure à 97 %. Ces élastomères présentent un indice de polymolécularité Ip qui est inférieur à 3,2 et, plus avantageusement, égal ou inférieur à 2,4.

De manière particulièrement préférentielle, ledit élastomère diénique est choisi dans le groupe des élastomères diéniques fortement insaturés constitué par les polybutadiènes (BR) et les polyisoprènes de synthèse (IR) et les copolymères de butadiène et d'isoprène (BIR) statistiques ou à blocs.

Selon une forme d'exécution de l'invention, une installation pour la mise en oeuvre du procédé précité de synthèse en continu dudit système catalytique comporte essentiellement :
(i) un réacteur continu d'alkylation qui consiste en un ou plusieurs, n, avec n un nombre entier supérieur à 0, mélangeur(s) dynamique(s) de type parfaitement agité(s) et continu d'alkylation dans lequel la réaction d'alkylation est conduite pendant une durée caractéristique minimale de cinq minutes ;
(ii) un réacteur continu d'halogénation-vieillissement qui comporte un ou plusieurs, (n') avec n' un nombre entier supérieur à 0, mélangeur(s) dynamique(s) de type parfaitement agité(s) disposés en série et, optionnellement, un ou plusieurs, (n") avec n" un nombre entier égal ou supérieur à 0, réacteur(s) continu(s) tubulaire(s) à écoulement piston disposant ou non d'une agitation de type statique ou dynamique, relié(s) à la sortie de la ligne (L), le(s)dit(s) mélangeur(s) dynamique(s) et réacteur(s) tubulaire(s) pouvant être disposé(s) selon n'importe quel ordre ;
   Le réacteur continu d'alkylation utilisé dans l'installation ne doit pas comporter de réacteur tubulaire mais consister uniquement en un ou plusieurs, (n) mélangeur(s) dynamique(s) de type parfaitement agité(s). En effet, dans une exploitation industrielle du procédé précité de synthèse, la présence d'un réacteur tubulaire à écoulement piston même disposant d'une agitation de type statique ou dynamique conduit à la formation d'un « gel » incoercible qui, au bout de quelques heures, colmate le réacteur d'alkylation et la ligne (L) et entraîne l'arrêt de l'installation.
   Le réacteur continu d'halogénation-vieillissement peut consister en un ou plusieurs, (n'), mélangeur(s) dynamique(s) de type parfaitement agité(s), en un ou plusieurs, (n'), mélangeur(s) dynamique(s) de type parfaitement agité(s) et d'un ou plusieurs, (n"), réacteur(s) tubulaire(s) à écoulement piston, en un ou plusieurs, (n"), réacteur(s) tubulaire(s) à écoulement piston disposant ou non d'une agitation de type statique ou dynamique.

Selon une autre forme d'exécution de l'invention, l'installation précitée comporte en outre :
- un réacteur de mise en solution du sel de métal de terre(s) rare(s) ;
- un mélangeur dynamique de type parfaitement agité d'addition du diène conjugué de préformation dans la ligne d'alimentation (L).

Selon une autre forme de réalisation de l'invention, une installation pour la mise en oeuvre du procédé de synthèse en continu dudit système catalytique comporte essentiellement :
(i) un réservoir de stockage disposant ou non d'un dispositif d'agitation de la solution de sel de terre(s) rare(s) visqueuse préparée « in situ » directement dans le solvant dans lequel peut être réalisée, à l'aide d'une quantité additionnelle appropriée de solvant, une dilution dudit sel de terre(s) rare(s) pour obtenir une solution de sel de terre(s) rare(s) ayant la concentration en sel souhaitée pour la mise en oeuvre du procédé selon l'invention ;
(ii) un réacteur continu d'alkylation qui est pourvu :
   - d'une première entrée qui est reliée au réservoir de stockage de la solution du sel de terre(s) rare(s) visqueuse préparée « in situ » ou à une pompe d'alimentation qui est adaptée pour amener la solution du sel de terre(s) rare(s) et du diène conjugué de préformation dans ledit réacteur d'alkylation,
   - d'une seconde entrée qui est reliée à un réservoir contenant un agent d'alkylation de type alkylaluminium de formule AlR₃ ou HAlR₂ et qui est adaptée pour amener ledit agent d'alkylation dans ledit réacteur d'alkylation,
   - d'une sortie adaptée pour évacuer dudit réacteur d'alkylation le produit d'alkylation vers un réacteur continu d'halogénation-vieillissement,
(iii) un réacteur continu d'halogénation -vieillissement qui est pourvu :
   - d'une première entrée qui est reliée à ladite sortie du réacteur d'alkylation et qui est adaptée pour amener le produit de la réaction d'alkylation dans ledit réacteur d'halogénation-vieillissement,
   - d'une seconde entrée qui est reliée à un réservoir contenant un donneur d'halogène de type halogénure d'alkylaluminium et qui est adaptée pour introduire ledit donneur d'halogène dans ledit réacteur d'halogénation,
   - d'une sortie du réacteur d'halogénation reliée vers l'aval de la ligne (L) de l'installation.

Le réacteur continu d'alkylation peut être réalisé sous différentes formes d'exécution, par exemple, être constitué d'un ou plusieurs, (n), préférentiellement n de 1 à 5, mélangeur(s) dynamique(s) de type parfaitement agité(s), disposé(s) en série, mais à l'exclusion d'un réacteur tubulaire qu'il soit ou non pourvu d'une agitation de type statique ou dynamique.

Le réacteur d'alkylation est relié à une ou plusieurs source(s) d'alimentation en solvant(s), monomère de préformation, sel de terre(s) rare(s) en solution, agent d'alkylation.

Le réacteur continu d'halogénation-vieillissement dans lequel le catalyseur préformé est obtenu à l'issue de l'halogénation peut être réalisé sous différentes formes d'exécution, par exemple être constitué d'un mélangeur dynamique de type parfaitement agité ou de plusieurs, (n'), de préférence de 1 à 5 mélangeurs dynamiques de type parfaitement agités, disposés en série, de tailles et volumes identiques ou différents, ou de (n') mélangeurs dynamiques de type parfaitement agités, et d'un ou plusieurs, (n"), de préférence de 1 à 3, réacteur(s) tubulaire(s) à écoulement piston continu disposant d'une agitation de type statique ou dynamique, lesdits mélangeur(s) et réacteur(s) tubulaire(s) disposés en série pouvant l'être dans un ordre indifférent.

A titre de réacteurs d'alkylation et/ou d'halogénation-vieillissement, on utilise préférentiellement un ou plusieurs mélangeur(s) dynamique(s) de type parfaitement agité(s), placés en série, à double enveloppe, éventuellement avec des serpentins internes ou faisceaux de refroidissement pour contrôler la température d'une manière adéquate.

Selon une autre forme de réalisation de l'invention pour la préparation en continu du système catalytique, l'installation précitée comporte en outre :
un réacteur de mise en solution du sel de métal de terre(s) rare(s) qui peut opérer en continu ou en discontinu, par exemple de type à double enveloppe parfaitement agité, qui est équipé :
   - d'une première entrée adaptée pour introduire dans ce réacteur, via une pompe, ou par différence de pression, au moins un solvant hydrocarboné inerte et saturé de type aliphatique ou alicyclique stocké dans un réservoir,
   - d'une seconde entrée adaptée pour introduire dans ce réacteur, via un doseur de poudre, un sel de terre(s) rare(s) d'un acide phosphorique organique (avantageusement le sel de formule abrégée Nd(P)₃ mentionné ci-dessus),
   - d'une troisième entrée adaptée pour introduire à titre optionnel dans ce réacteur une partie du diène conjugué de préformation,
   - d'une sortie adaptée pour évacuer dudit réacteur une solution dudit sel dans le(s)dit(s) solvant(s) contenant ou non du diène conjugué de préformation vers l'aval de la ligne de l'installation (L).
un mélangeur dynamique de type parfaitement agité d'addition en continu du diène conjugué de préformation qui est pourvu :
   - d'une première entrée qui est reliée à ladite sortie du réacteur de mise en solution, respectivement sortie du réservoir de stockage de la solution du sel de terre(s) rare(s), et qui est adaptée pour introduire ladite solution dans ledit mélangeur ;
   - d'une seconde entrée qui est reliée à un réservoir contenant un diène conjugué de préformation et qui est adaptée pour introduire ledit diène conjugué dans ledit mélangeur ; et
   - d'une sortie adaptée pour évacuer dudit mélangeur un mélange de ladite solution et dudit diène conjugué de préformation;

Lorsque ledit sel de métal de terre(s) rare(s) est préparé « in situ » directement dans le solvant, il est préférentiellement introduit directement dans le réacteur d'alkylation, cependant il peut également être introduit en totalité ou en partie dans le mélangeur dynamique de type parfaitement agité d'addition du diène de préformation, soit simultanément avec du diène conjugué de préformation, soit avant ce dernier ou encore après ou avant la pompe (18).

Le monomère de diène conjugué de préformation, éventuellement le solvant hydrocarboné inerte de dilution, peuvent être introduits dans la ligne où circule le sel de terre(s) rare(s) en solution.

Avantageusement, l'installation selon l'invention comporte en outre, en aval de ladite ligne, au moins un réacteur continu de polymérisation qui est adapté pour polymériser au moins un monomère diène conjugué en étant alimenté en continu par ladite ligne.

On notera que l'installation selon l'invention permet avantageusement de coupler la synthèse en continu dudit système catalytique à une polymérisation d'au moins un diène conjugué également mise en oeuvre en continu dans un réacteur de polymérisation disposé à l'extrémité de la ligne (L) et à un procédé de polymérisation en continu d'au moins un diène conjugué à l'aide du système catalytique obtenu selon l'invention

L'installation selon l'invention peut, à titre optionnel, comporter en outre un réservoir de stockage du système catalytique.

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les dessins joints, parmi lesquels :
la Fig. 1 est un schéma d'une installation selon un exemple de réalisation de l'invention pour la préparation en continu d'un système catalytique selon l'invention,
la Fig. 2 est un schéma d'une installation selon une variante de réalisation de l'invention pour la préparation en continu d'un système catalytique selon l'invention,
la Fig. 3 est un schéma d'une installation selon une variante de réalisation supplémentaire de l'invention pour la préparation en continu d'un système catalytique selon l'invention,
la Fig. 4 est un schéma d'une installation selon une troisième variante de réalisation de l'invention pour la préparation en continu d'un système catalytique selon l'invention,
la Fig. 5 est un schéma d'une installation selon une quatrième variante de réalisation de l'invention pour la préparation en continu d'un système catalytique selon l'invention,
la Fig. 6 est un schéma d'une installation selon une variante de réalisation non conforme à l'invention pour la préparation en continu d'un système catalytique selon l'invention et la polymérisation en continu d'au moins un monomère diène conjugué, et
la Fig. 7 est un graphique illustrant des cinétiques de polymérisation du butadiène respectivement obtenues avec un système catalytique préparé en discontinu et un système catalytique préparés selon le procédé continu de l'invention avec une installation correspondant à la Fig. 3.
la Fig. 8 est un graphique illustrant des cinétiques de polymérisation du butadiène respectivement obtenues avec 2 systèmes catalytiques préparés selon le procédé continu de l'invention avec une installation correspondant d'une part à la Fig. 3 (MD1) et d'autre part à la Fig. 2 (MD2).
la Fig. 9 est un graphique illustrant des cinétiques de polymérisation du butadiène respectivement obtenues avec 2 systèmes catalytiques préparés selon le procédé continu de l'invention avec une installation correspondant d'une part à la Fig. 3 (MD1) et d'autre part à la Fig. 4 (MD3).

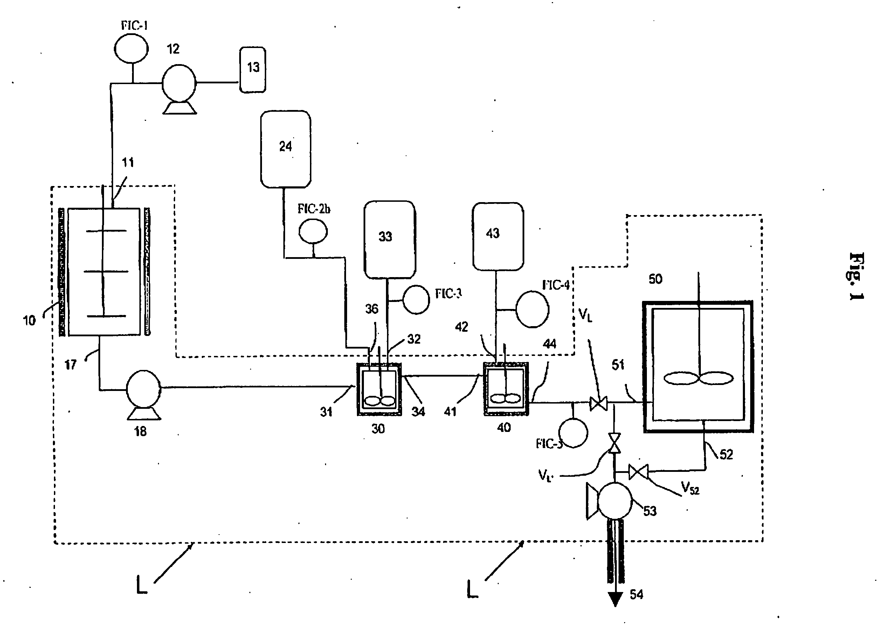

L'installation illustrée à la Fig. 1 comporte essentiellement un réservoir de stockage (10) d'une solution de sel de terre(s) rare(s) préparé « in situ » dans le solvant équipé :
- d'une entrée reliée à un réservoir (13) de solvant(s) hydrocarboné(s) et inerte(s) et saturé(s) de type aliphatique ou alicyclique, lequel est ou lesquels sont utilisé(s) pour régler à la valeur appropriée la concentration du sel de terre(s) rare(s), via une pompe (12) ou par différence de pression,
- d'une sortie (17) adaptée pour amener dans un réacteur d'alkylation (30) une solution dudit sel de terre(s) rare(s) dans le(s)dit(s) solvant(s), ou reliée à une pompe (18) adaptée pour injecter directement ou indirectement une solution concentrée ou diluée dudit sel de terre(s) rare(s) et pour y réaliser en sortie la dilution de la solution concentrée.
- un réacteur d'alkylation constitué d'un mélangeur dynamique de type parfaitement agité (30), par exemple à double enveloppe, équipé :
- d'une première entrée (31) qui est reliée à la sortie de la pompe (18) adaptée pour apporter ladite solution de sel de terre(s) rare(s) dans ce mélangeur (30),
- d'une seconde entrée (32) qui est reliée à un réservoir (33) contenant un agent d'alkylation de type alkylaluminium et qui est adaptée pour introduire ledit agent d'alkylation dans ce mélangeur (30),
- d'une troisième entrée (36) qui est reliée à un réservoir (24) contenant le diène conjugué de préformation, qui est adaptée pour introduire ledit diène conjugué de préformation dans ce mélangeur (30),
- d'une sortie (34) adaptée pour apporter de ce mélangeur (30) le produit de mélangeage dudit mélange et dudit agent d'alkylation au réacteur d'halogénation-vieillissement (40).
   un réacteur d'halogénation-vieillissement (40) est constitué d'un mélangeur dynamique de type parfaitement agité, par exemple à double enveloppe, équipé :
- d'une première entrée (41) qui est reliée à la sortie d'alkylation (34) et qui est adaptée pour amener le produit de la réaction d'alkylation dans ce mélangeur (40),
- d'une seconde entrée (42) qui est reliée à un réservoir (43) contenant un donneur d'halogène de type halogénure d'alkylaluminium et qui est adaptée pour amener ledit donneur d'halogène dans ce mélangeur (40),
- d'une sortie (44) qui est adaptée pour évacuer du mélangeur (40) le système catalytique préparé en continu selon l'invention et l'apporter en continu, via une pompe (53), à un réacteur de polymérisation d'au moins un monomère de diène conjugué.

Selon un mode de réalisation optionnel, l'installation comprend en outre un réacteur tubulaire (45), par exemple à double enveloppe, qui est reliée à la sortie (44) et qui est adapté pour contrôler ou faire varier le temps de séjour dudit mélange dans ledit réacteur.

Selon un mode de réalisation optionnel supplémentaire, le système catalytique préparé en continu est apporté vers un réservoir de stockage (50), adapté pour conserver le système catalytique à une température allant de -25°C à +20°C pendant une durée pouvant atteindre plusieurs semaines, équipé :
- d'une entrée de stockage (51) reliée à la sortie (44) du mélangeur (40) ou à la sortie du réacteur tubulaire optionnel (45), et
- d'une sortie (52) destinée à alimenter en continu ledit réacteur de polymérisation (non illustré), disposé à l'extrémité de la ligne (L) et relié à ce dernier via ladite pompe (53) (voir flèche 54), à partir de la sortie (52).
A cet effet, des vannes (VL), (VL') et (V52) sont respectivement prévues sur la ligne (L) et la sortie (52).

L'installation illustrée à la Fig. 1 peut, selon un mode de réalisation de l'invention, ne pas comprendre de réservoir de stockage (10) de la solution du sel de terre(s) rare(s), la solution du sel de terre(s) rare(s) étant introduite directement dans la pompe (18) soit sous forme concentrée et la dilution étant réalisée en sortie de ladite pompe (18) ou en début de ligne (L) avant le réacteur d'alkylation (30), soit diluée à la concentration choisie pour réagir avec les autres constituants.

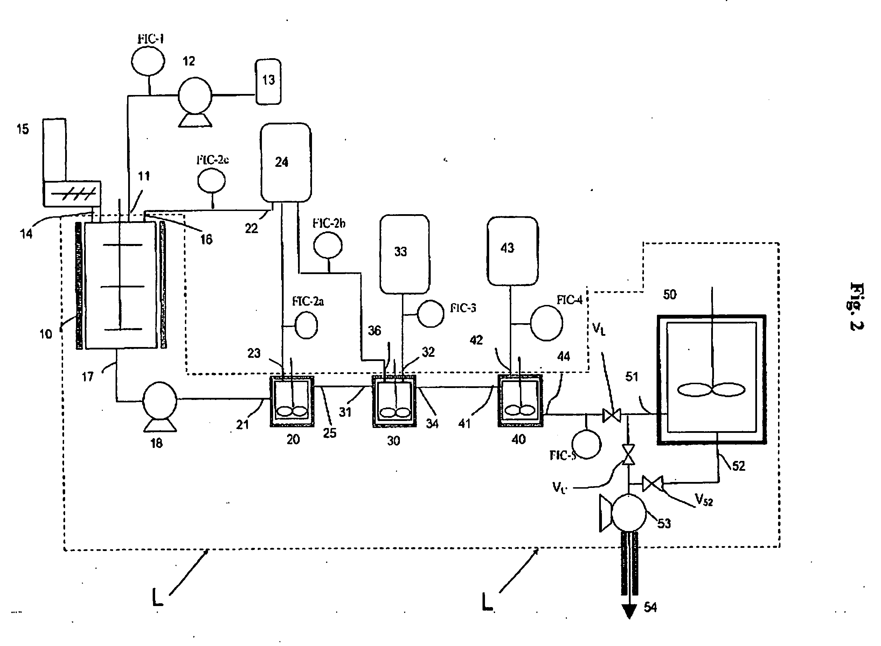

L'installation illustrée à la Fig. 2 est identique à celle représentée à la Fig. 1 hormis le fait qu'elle comporte en outre :
- un réacteur de mise en solution (10) à la place du réservoir de stockage (10), par exemple de type à double enveloppe, parfaitement agité, équipé :
   - d'une première entrée (11) adaptée pour introduire dans ce réacteur (10), via une pompe (12) ou par différence de pression, au moins un solvant hydrocarboné inerte et saturé de type aliphatique ou alicyclique stocké dans un réservoir (13),
   - d'une seconde entrée (14) adaptée pour introduire dans ce réacteur (10), via un doseur (15) de poudre, un sel de terre(s) rare(s) d'un acide phosphorique organique, avantageusement le sel de formule abrégée Nd(P)₃ mentionné ci-dessus),
   - d'une troisième entrée (16) adaptée pour introduire à titre optionnel dans ce réacteur (10) une partie du diène conjugué de préformation stocké dans le réservoir (24) et équipé d'une sortie (22) reliée à l'entrée (16), et
   - d'une sortie (17) adaptée pour évacuer dudit réacteur (10) une solution dudit sel dans le(s)dit(s) solvant(s) contenant ou non du diène conjugué de préformation.
- un mélangeur dynamique de type parfaitement agité d'addition du diène de préformation (20), par exemple à double enveloppe, équipé :
- d'une première entrée (21) qui est reliée via une pompe (18) à un réacteur de mise en solution (10) contenant le sel de terre(s) rare(s) en solution et optionnellement un diène conjugué de préformation, et qui est adaptée pour amener ladite solution dans ce mélangeur (20),
- d'une seconde entrée (23) qui est reliée à un réservoir (24) contenant un diène conjugué de préformation et qui est adaptée pour introduire ledit diène conjugué dans ce mélangeur (20), et
- d'une sortie (25) adaptée pour amener le mélange de ladite solution et dudit diène conjugué vers le réacteur d'alkylation (30).

Selon un mode de réalisation de l'invention, le mélangeur dynamique de type parfaitement agité (20) présente par exemple un volume de 25 ml et il est muni d'un agitateur adapté pour tourner à une vitesse par exemple égale à 1500 tours/ min.

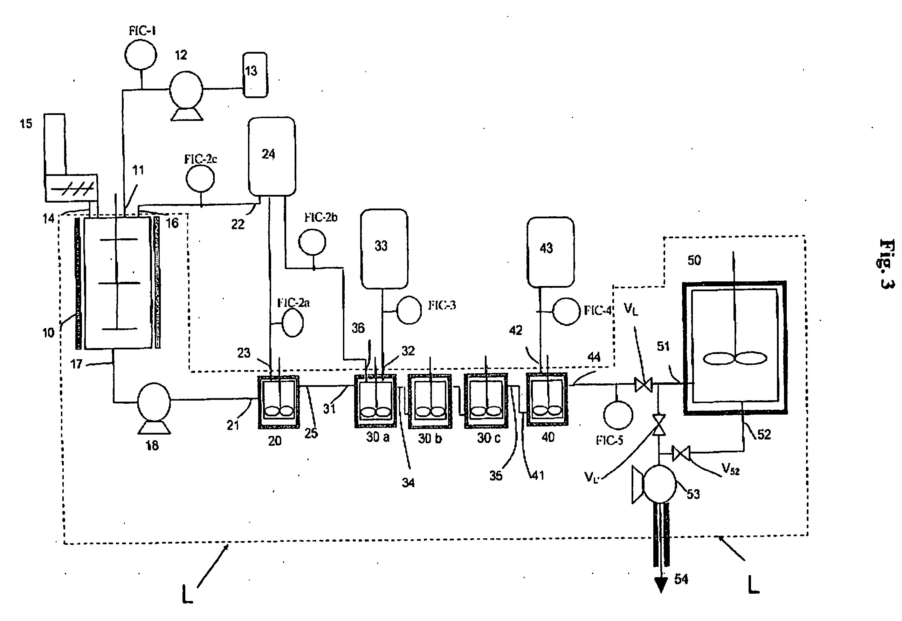

L'installation représentée à la Fig. 3 est identique à celle illustrée à la Fig. 2 hormis le fait que le réacteur d'alkylation (30) est constitué de n (n = 3) mélangeurs dynamiques de type parfaitement agités, d'alkylation, (30a), (30b), (30c), à double enveloppe, susceptibles d'opérer en continu et disposés en série, pourvus :
- pour le premier mélangeur (30a) :
   - d'une première entrée (31) qui est reliée à la sortie (25) du mélangeur d'addition du diène conjugué de préformation,
   - d'une seconde entrée (32) qui est reliée à un réservoir (33) contenant un agent d'alkylation de type alkylaluminium et qui est adaptée pour amener ledit agent d'alkylation dans ce mélangeur (30a),
   - d'une troisième entrée (36) qui est reliée à un réservoir (24) contenant le diène conjugué de préformation qui est adaptée pour introduire ledit diène conjugué de préformation dans ce mélangeur (30),
- d'une sortie (34) qui est reliée à l'entrée du second mélangeur (30b), lequel est relié au troisième mélangeur (30c), dont la sortie (35) est reliée au réacteur d'halogénation-vieillissement.

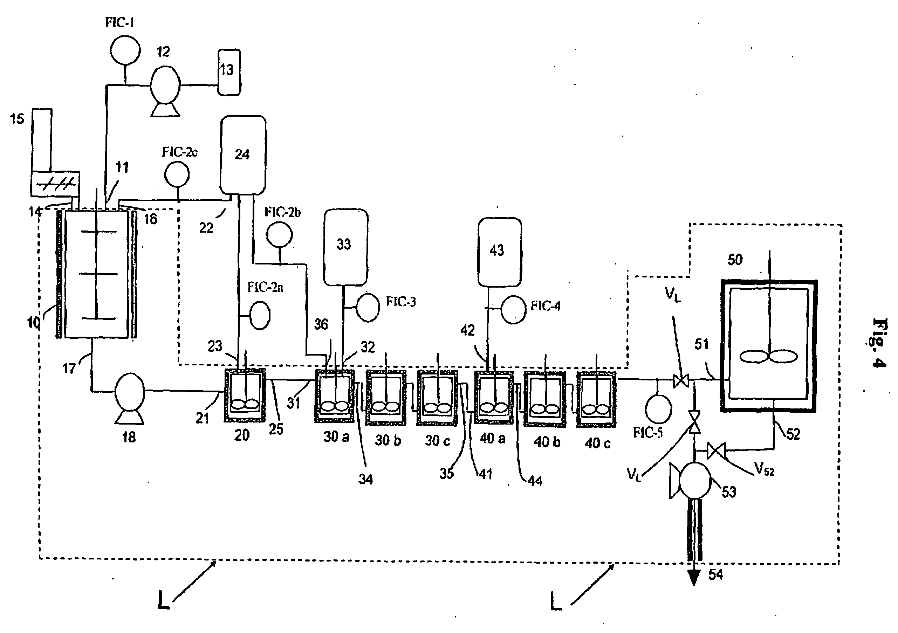

L'installation représentée à la Fig. 4 est identique à celle représentée à la Fig. 3 hormis le fait que le réacteur d'halogénation-vieillissement (40) est constitué de n' (n' = 3) mélangeurs dynamiques de type parfaitement agités, respectivement (40a), (40b), (40c), à double enveloppe, pourvus pour le premier mélangeur :
- d'une entrée (41) qui est reliée à la sortie (35) du réacteur d'alkylation,
- d'une seconde entrée (42) qui est reliée à un réservoir (43) contenant un donneur d'halogène de type halogénure d'alkylaluminium et qui est adaptée pour amener ledit donneur d'halogène dans ce mélangeur (40a),
- d'une sortie (44) qui est reliée à un second mélangeur (40b), lequel est relié à un troisième mélangeur (40c) reliée à la sortie de la ligne (L), soit directement au réacteur de polymérisation d'au moins un monomère de diène conjugué, soit au réservoir de stockage (50).

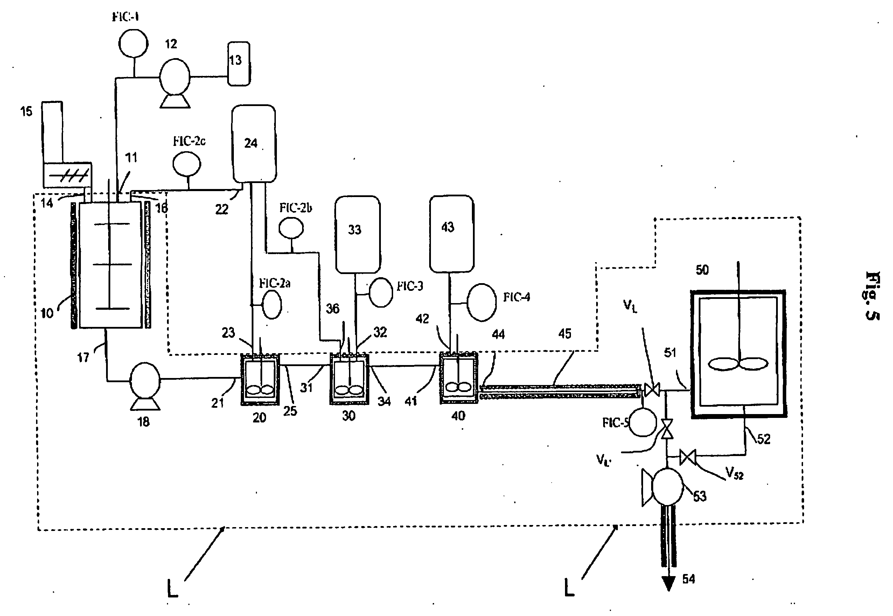

L'installation représentée à la Fig. 5 est identique à celle illustrée à la Fig. 2, hormis le fait que le réacteur d'halogénation-vieillissement (40) comprend en outre un réacteur tubulaire (45), à écoulement piston de type agitation dynamique qui est adapté pour contrôler ou faire varier le temps de vieillissement du catalyseur préformé préparé en continu selon l'invention.

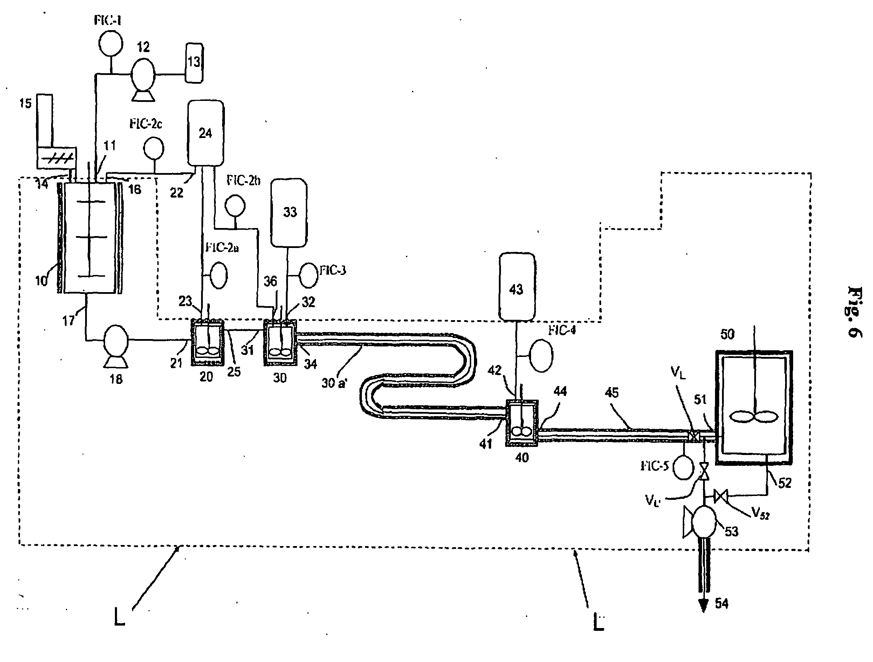

L'installation représentée à la Fig. 6 est identique à celle illustrée à la Fig. 5 hormis le fait que le réacteur d'alkylation comprend, en plus du mélangeur dynamique de type parfaitement agité (30), un réacteur tubulaire (30a') à écoulement piston de type agitation dynamique.

Sont en outre représentés une pluralité de débitmètres FIC-1, FIC-2a, FIC-2b, FIC-2c, FIC-3,FIC-4 qui sont respectivement prévus en amont du réacteur 10 et des mélangeurs 20, 30 et 40.

En fonctionnement, on fixe le débit de la solution de sel de terre(s) rare(s) quittant le réacteur de mise en solution (10) par un contrôle du débit final du système catalytique en sortie de la ligne L par l'intermédiaire d'un débitmètre FIC-5. Pour chaque formule de système catalytique visée, on mesure et l'on régule les débits des différents éléments de la formule catalytique afin de synthétiser un catalyseur de formule catalytique donnée.

L'homme du métier pourra adapter le volume et la taille de chacun des éléments constitutifs des réacteurs d'alkylation (30) et d'halogénation (40) en fonction des différents éléments de la formule catalytique visée pour faire varier le temps de séjour caractéristique de la réaction d'alkylation et/ou la durée du vieillissement du système catalytique préformé obtenu à l'issue de la réaction d'halogénation.

Les caractéristiques précitées de la présente invention seront mieux comprises à la lecture de la description de plusieurs exemples de réalisation de l'invention.

### Exemple I :

### Préparation d'un système catalytique T1 selon un procédé continu à réacteur tubulaire non conforme à l'invention et d'un système catalytique MD1 selon un procédé conforme à l'invention mettant en oeuvre des mélangeurs dynamiques de type parfaitement agités :

### 1) Système catalytique T1 :

Ce système catalytique a été préparé selon un procédé mis en oeuvre dans l'installation représentée à la Fig. 6. Le réacteur de mise en solution (10) est une cuve agitée par 3 mobiles équirépartis en hauteur et de 32,5 1 de volume. Le mélangeur dynamique (30) et le réacteur tubulaire d'alkylation (30a') sont respectivement de volume 25 ml et 930 ml. Le mélangeur dynamique (40) et le réacteur tubulaire (45) d'halogénation-vieillissement sont respectivement de volume 150 ml et 3670 ml. Le débit de l'installation est de 3.82 l/h

On a préparé en continu le système catalytique T1, qui présente la formule catalytique Nd/ butadiène/ HDiBA/ CDEA = 1 / 30 / 2 / 2.9 en termes de rapport molaire et la concentration 0.02 mol.L⁻¹ en néodyme.

Plus précisément, on a préparé ce système catalytique T1 en réalisant :
- la mise en solution et l'ajout du diène de préformation à l'intérieur du réacteur (10) du sel NdP₃ dans le MCH pendant 30 min. ou plus à 30° C,
- l'alkylation dans le mélangeur dynamique (30) et le réacteur tubulaire du mélange ainsi obtenu et maintenu à 30° C via du « HDiBA », pendant une durée de 15 min., la concentration utilisée en HDIBA est de 1 mol.L⁻¹; puis
- l'halogénation dans le mélangeur dynamique (40) du produit de la réaction d'alkylation et son vieillissement dans le réacteur tubulaire via du « CDEA », à 60° C et pendant une durée de 60 min. La concentration utilisée en « CDEA » est de 0,5 mol.L⁻¹.

La solution catalytique ainsi obtenue est refroidie par transvasement dans le réservoir de stockage agité 50 maintenu à -10°C.

### 2) Système catalytique MD1 selon l'invention :

Ce système catalytique a été préparé selon un procédé conforme à l'invention mis en oeuvre dans l'installation décrite à la Fig. 3. Le réacteur de mise en solution (10) est une cuve agitée par 3 mobiles équirépartis en hauteur et de 32,5 1 de volume. Les mélangeurs dynamiques de type parfaitement agité (30a), (30b), (30c) destinés à l'étape d'alkylation et (40) destiné à l'étape d'halogénation/vieillissement sont de volume respectifs 0.161 pour (30a), (30b), (30c) et 2.75 1 pour (40). Le débit de l'installation est de 1.93 l/h.

On a préparé en continu le système catalytique MD1 qui présente la formule catalytique Nd/ butadiène/ HDiBA/ CDEA = 1/30 / 2 / 2.7 et la concentration 0.02 mol.L⁻¹ en néodyme.

Plus précisément, on a préparé ce système catalytique en réalisant :
- à l'intérieur du réacteur 10, la mise en solution et l'ajout du diène de préformation du sel NdP₃ dans le MCH pendant 30 min. ou plus à 30° C,
- dans les mélangeurs dynamiques de type parfaitement agité (30a), (30b) et (30c), l'alkylation du mélange ainsi obtenu et maintenu à 30° C via du « HDiBA », pendant une durée de 15 min., la concentration utilisée en HDIBA est de 1 mol.L⁻¹; puis
- dans le mélangeur dynamique de type parfaitement agité (40), l'halogénation et le vieillissement du produit de la réaction d'alkylation via du « CDEA », à 60° C et pendant une durée de 85 min. La concentration utilisée en « CDEA » est de 0,5 mol.L⁻¹.

La solution catalytique ainsi obtenue est refroidie par transvasement dans le réservoir de stockage agité 50 maintenu à -10°C.

On notera qu'une concentration en « CDEA » de 1 mol.L⁻¹ pourrait également être utilisée pour préparer ces systèmes catalytiques.

### 3) Comparaison des systèmes catalytiques T1 et MD1 :

Pour le procédé de préparation du système catalytique T1 mis en oeuvre dans l'installation représentée à la Fig. 6, après 7 heures de fonctionnement stable, nous observons dans le mélangeur dynamique (40) dédié à l'injection du « CDEA » et dans les conduits tubulaires adjacents, une forte proportion de gel qui commence à fortement obstruer la sortie du montage et déstabilise le fonctionnement du procédé. Il est d'autre part nécessaire de changer les filtres de sortie de façon très régulière. Ainsi, le fonctionnement continu n'est pas possible à proprement parler puisqu'il est nécessaire d'arrêter fréquemment la ligne pour la nettoyer.

Pour le procédé conforme à l'invention mis en oeuvre pour la préparation du système catalytique MD1, nous n'observons ni bouchage de la ligne, ni formation de gel dans les réacteurs et conduits de la ligne (L).

On notera également qu'une variante du procédé tubulaire consistant à utiliser des mélangeurs statiques à la place du mélangeur dynamique (40) au stade de l'injection du « CDEA » n'est évidemment pas du tout avantageuse en ce sens que le moindre mélangeage favorise encore davantage la formation du gel évoqué ci-dessus.

### Exemple II :

### Préparation d'un système catalytique D1 selon un procédé discontinu et comparaison au système catalytique MD1 préparée selon le procédé continu, conforme à l'invention :

### 1) Système catalytique D1 :

On a préparé un système catalytique D 1 en suivant le procédé de préparation en discontinu décrit dans le document précité WO-A-02/38636.

Ce système catalytique D1 présente la formule suivante, Nd/ butadiène/ HDiBA/ CDEA = 1 / 30 / 2 / 2.9 et sa concentration est de 0.02 mol.L⁻¹.

A cet effet, on a versé un solvant constitué de méthylcyclohexane (MCH) dans un réacteur discontinu de 25 L préalablement nettoyé de ses impuretés. On a soumis ensuite ce sel à un barbotage à l'azote pendant 3 min, puis on a mis en oeuvre les étapes successives suivantes :

### - Etape de mise en solution :

On a introduit dans le réacteur contenant le solvant le sel de néodyme NdP₃ à l'état de poudre en vue de la formation d'une solution gélatineuse, la durée et la température de mise en contact de ce solvant et du sel après un nouveau barbotage de 3 minutes sont respectivement de 30 minutes et de 30° C.

### - Etape d'ajout du diène de préformation :

On a introduit ensuite du butadiène dans ce réacteur à une température de 30° C.

### - Etape d'alkylation :

On a introduit ensuite dans ce réacteur maintenu à 30 °C, du « HDiBA » à titre d'agent d'alkylation, selon une concentration d'environ 1 mol.L⁻¹. Le milieu réactionnel devient aussitôt fluide. La durée de l'alkylation est de 15 min.
La température de la réaction d'alkylation était de 30° C.

### - Etape d'halogénation :

On a introduit ensuite dans ce réacteur du « CDEA », selon une concentration d'environ 1 mol.L⁻¹. La température du milieu réactionnel est alors portée à 60° C. L'élévation extrêmement rapide de température est liée à l'exothermie de la réaction, proportionnelle à la quantité de butadiène introduite dans le catalyseur et à l'absence de refroidissement notable et simultané par les parois du réacteur.

### - Etape de vieillissement :

On a procédé ensuite à un vieillissement du mélange ainsi obtenu en maintenant cette température de 60° C pendant une durée de 60 min.

On a refroidi et stocké finalement la solution catalytique obtenue sous atmosphère d'azote dans un congélateur, à la température de -15° C.

### 2) Comparaison des systèmes catalytiques D1 et MD1 en polymérisation du butadiène :

A titre de réacteur de polymérisation, une bouteille "Steinie" de 250 mL est utilisée. Chaque réaction de polymérisation est mise en oeuvre en soumettant cette bouteille préalablement lavée et séchée à une agitation dans un bac à eau thermostaté.

Chaque réaction de polymérisation du butadiène (on utilise 10 g de butadiène par bouteille) est effectuée dans le MCH à 30° C et sous atmosphère inerte d'azote. On a utilisé un rapport massique « solvant de polymérisation (MCH) / monomère (Btd) » égal à 9 (ce rapport massique est appelé S/M ci-après).

La quantité de base catalytique en néodyme est de 846 µmol pour 100 g de butadiène.

L'étanchéité de la bouteille est assurée par un ensemble de type "joint-capsule percée" permettant ainsi l'ajout de chaque système catalytique à l'aide d'une seringue.

Le méthanol est utilisée selon un volume de 1 mL comme agent de stoppage de la réaction de polymérisation, et la N-1,3-diméthylbutyl-N'-phényl-p-phénylènediamine (6PPD) comme agent de protection (selon un volume de 1 ml à une concentration de 10 g.L⁻¹ dans le cyclohexane, soit une masse de 0,02 g).

La mesure du taux de conversion du butadiène en polybutadiène en fonction du temps de réaction est utilisée pour décrire la cinétique de polymérisation.

La viscosité inhérente ηinh à 0,1 g.dL⁻¹ dans le toluène caractérise quant à elle la macrostructure de chaque polybutadiène obtenu.

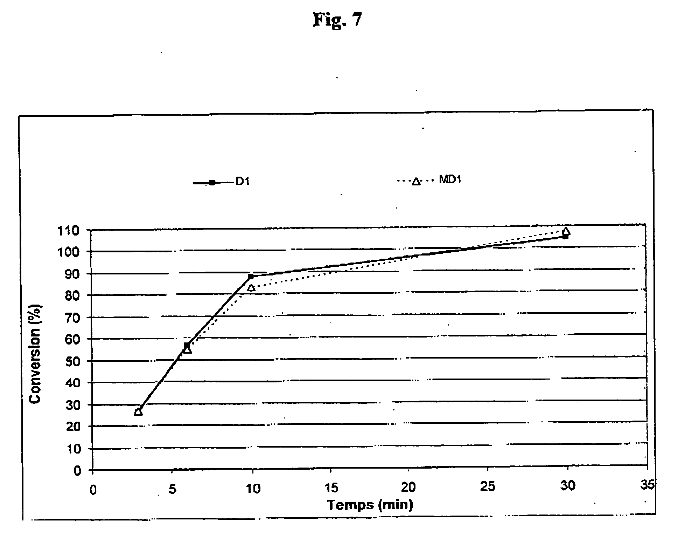

Les résultats sont reportés dans la Fig. 7.

Ces courbes montrent qu'il est possible d'avoir la même activité catalytique avec un système catalytique préparé en continu selon l'invention qu'avec un système catalytique préparé en discontinu.

### Exemple III :

### Préparation d'un système catalytique concentré MD2 selon un procédé continu conforme à l'invention. Influence de la concentration du catalyseur :

### 1) Préparation du système catalytique MD2 :

Ce système catalytique a été préparé selon le procédé conforme à l'invention mise en oeuvre dans l'installation schématisée à la Fig. 2. Le réacteur de mise en solution (10) est une cuve agitée par 3 mobiles équirépartis en hauteur et de 32,5 1 de volume. Les mélangeurs dynamiques de type parfaitement agité (30) et (40) respectivement destinés aux étapes d'alkylation et d'halogénation/vieillissement sont de volumes respectifs 0.49 1 et 2.75 1. Le débit de l'installation est de 2.57 l/h

On a préparé en continu sur ce procédé le système catalytique MD2, qui présente la formule catalytique Nd/ butadiène/ HDiBA/ CDEA = 1 / 30 / 2 / 2.7 et la concentration 0.04 mol.L⁻¹ en néodyme.

Plus précisément, on a préparé ces systèmes catalytiques en utilisant une solution de sel NdP₃ dans le MCH concentrée à 0.136 mol.L⁻¹ au lieu des 0.025 mol.L⁻¹ précédemment mis en oeuvre contenant un taux d'acide libre de 2,1 % en masse (soit un excès molaire de l'acide bis (2-éthylhexyl) phosphorique par rapport au Néodyme de 41,02 %) et ayant un taux d'humidité de 24 parties en poids par million (soit un excès molaire d'eau par rapport au Néodyme de 0,84 %). La solution ainsi préparée est chargée dans le réacteur (10) maintenu à 30°C, et en réalisant :
- dans le réacteur (10), l'ajout du diène de préformation à cette solution
- dans le mélangeur dynamique de type parfaitement agité (30), l'alkylation du mélange ainsi obtenu et maintenu à 30° C via du « HDiBA », pendant une durée de 15 min., la concentration utilisée en HDIBA est de 1 mol.L⁻¹; puis
- dans le mélangeur dynamique de type parfaitement agité (40), l'halogénation et le vieillissement du produit de la réaction d'alkylation via du « CDEA », à 60° C et pendant une durée de 64 min. La concentration utilisée en « CDEA » est de 0,5 mol.L⁻¹. On notera qu'aucune trace d'une quelconque élévation de température n'est décelée alors que la température du fluide caloporteur autour du mélangeur dynamique (40) est maintenue constante.

Aucune trace de gel n'apparaît après 7 heures ou davantage de fonctionnement.

### 2) Comparaison des systèmes catalytiques MD1 et MD2 en polymérisation du butadiène :

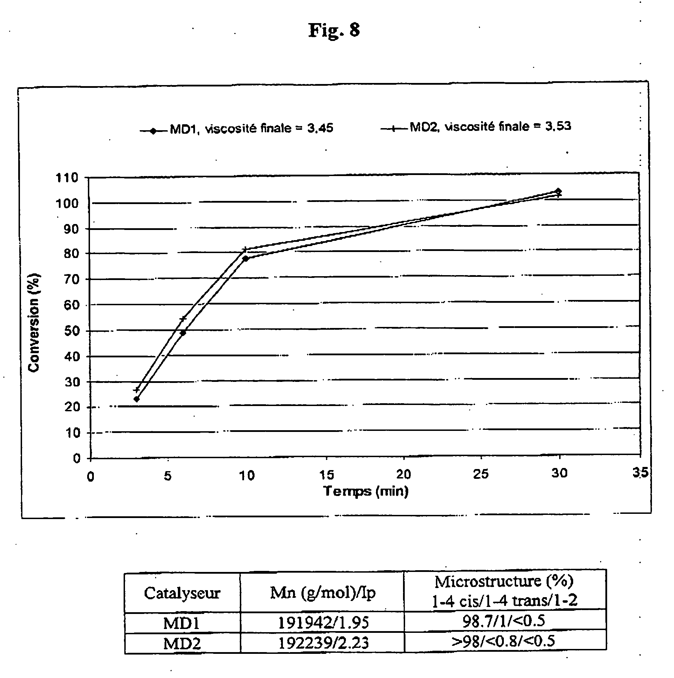

Les deux catalyseurs sont engagés dans des réactions de polymérisation du butadiène selon le mode opératoire rigoureusement identique à celui décrit dans l'exemple II. Les résultats sont consignés dans la Fig. 8.

La concentration du catalyseur est donc facilement modulable à travers la concentration des charges de l'agent d'alkylation et de la solution de sel de néodyme. Un catalyseur concentré est aussi actif que son analogue dilué. Les caractéristiques finales du polymère obtenu restent elles aussi très intéressantes quant à une application pour la fabrication d'enveloppes de pneumatiques. On notera que ce procédé selon l'invention de synthèse en continu du système catalytique permet de maîtriser d'une manière satisfaisante l'exothermicité de l'étape précitée de préformation même dans le cas d'une concentration finale de terre(s) rare(s) relativement élevée dans le système catalytique, du fait que cette exothermicité peut être contrôlée dans un procédé continu par une meilleure répartition des échanges thermiques.

### Exemple IV :

### Préparation d'un système catalytique MD3 selon un procédé continu conforme à l'invention mettant en oeuvre deux jeux de mélangeurs dynamiques de type parfaitement agité disposés en série :

### 1) Préparation du système catalytique MD3:

Ce système catalytique a été préparé selon le procédé conforme à l'invention mis en oeuvre dans l'installation schématisée à la Fig. 4. Le réacteur de mise en solution (10) est une cuve agitée par 3 mobiles équirépartis en hauteur et de 32,5 1 de volume. Les mélangeurs dynamiques de type parfaitement agité (30a), (30b), (30c) destinés aux étapes d'alkylation et (40a), (40b), (40c) destinés à l'étape d'halogénation-vieillissement sont de volume respectifs 0.16 1 pour (30a), (30b), (30c) et 0.920 1 pour (40a), (40b), (40c). Le débit de l'installation est de 1.93 l/h.

On a préparé en continu sur ce procédé le système catalytique MD3, qui présente la formule catalytique Nd/ butadiène/ 14DiBA/ CDEA = 1 / 30 / 2 / 2.7 et la concentration 0.02 mol.L⁻¹ en néodyme.

Plus précisément, on a préparé ce système catalytique MD3 en réalisant :
- la mise en solution et l'ajout du diène de préformation à l'intérieur du réacteur (10) du sel NdP₃ dans le MCH pendant 30 min. ou plus à 30° C,
- dans les mélangeur dynamiques de type parfaitement agité (30a), (30b), (30c), l'alkylation du mélange ainsi obtenu et maintenu à 30° C via du « HDiBA », pendant une durée de 15 min., la concentration utilisée en HDIBA est de 1 mol.L⁻¹; puis
- dans les mélangeurs dynamiques de type parfaitement agité (40a), (40b), (40c), l'halogénation et le vieillissement du produit de la réaction d'alkylation via du « CDEA », à 60°C et pendant une durée de 85 min. La concentration utilisée en « CDEA » est de 0,5 mol.L⁻¹).

Aucune trace de gel n'apparaît après les 7 heures de fonctionnement de cette synthèse et au-delà.

### 2) Comparaison des systèmes catalytiques MD1 et MD3 :

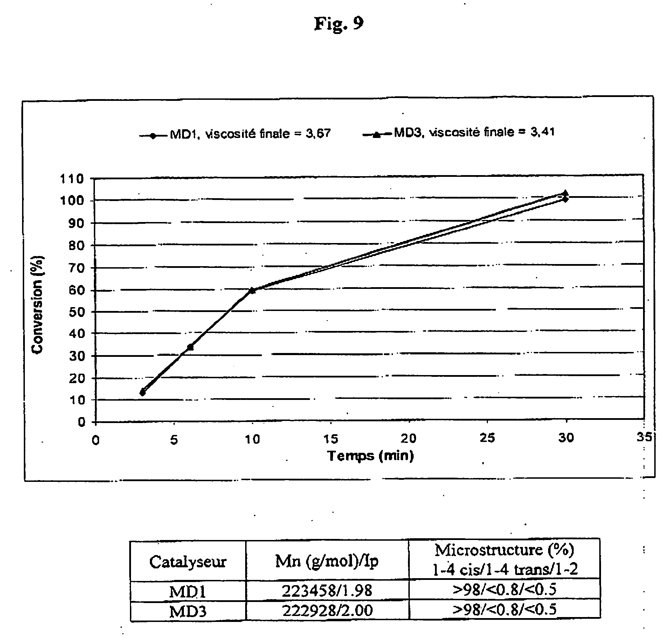

Les deux catalyseurs sont engagés dans des réactions de polymérisation du butadiène selon le mode opératoire rigoureusement identique à celui décrit dans l'exemple II. Les résultats sont consignés dans la Fig. 9.

On retrouve une activité catalytique et des caractéristiques macrostructurales et microstructurales parfaitement similaires à celle des autres catalyseurs conformes à l'invention.

### Exemple V :

### Préparation d'un système catalytique MD4 de bas rapport HDiBA/Nd selon un procédé continu conforme à l'invention :

### 1) Préparation du système catalytique MD4 :

Ce système catalytique a été préparé selon le procédé conforme à l'invention mise en oeuvre dans l'installation schématisée à la Fig. 1 qui comporte en outre un doseur de poudre (15), du sel de terre rare NdP₃ dont la mise en solution est faite dans le réservoir de stockage agité (10) qui dispose d'une seconde entrée (14) reliée au doseur de poudre. Le réacteur de mise en solution (10) est une cuve agitée par 3 mobiles équirépartis en hauteur et de 32,5 1 de volume. Les mélangeurs dynamiques de type parfaitement agité (30) et (40) respectivement destinés aux étapes d'alkylation et d'halogénation/viellissement sont de volumes respectifs 0.49 1 et 2.78 1. Le débit de l'installation est de 2.34 1/h

On a préparé en continu sur ce procédé le système catalytique ND4, qui présente la formule catalytique Nd/ butadiène/ HDiBA/ CDEA = 1 / 30 / 1.3 / 2.7 et la concentration 0.04 mol.L⁻¹ en néodyme.

Plus précisément, on a préparé ces systèmes catalytiques en utilisant une solution de sel NdP₃ dans le MCH concentrée à 0.055 mol.L⁻¹ préparée dans le réacteur (10) maintenu à 30°C, et en réalisant :
- dans le mélangeur dynamique de type parfaitement agité (30), l'ajout du diène de préformation à cette solution
- dans le mélangeur dynamique de type parfaitement agité (30), l'alkylation du mélange ainsi obtenu et maintenu à 30° C via du « HDiBA », pendant une durée de 15 min., la concentration utilisée en HDIBA est de 1 mol.L⁻¹; puis
- dans le mélangeur dynamique de type parfaitement agité (40), l'halogénation et le vieillissement du produit de la réaction d'alkylation via du « CDEA », à 60° C et pendant une durée de 70 min. La concentration utilisée en « CDEA » est de 0.785 mol-L⁻¹.

On notera qu'il n'y a pas formation de gel ni d'encrassement dans l'installation.

### 2) Application du système catalytique MD4 en polymérisation du butadiène :

A titre de réacteur de polymérisation, une bouteille "Steinie" de 250 mL est utilisée. L'étanchéité de la bouteille est assurée par un ensemble de type "joint-capsule percée" permettant ainsi l'ajout de chaque système catalytique à l'aide d'une seringue. La réaction de polymérisation est mise en oeuvre en soumettant cette bouteille préalablement lavée et séchée à une agitation dans un bac à eau thermostaté.

La réaction de polymérisation du butadiène (on utilise 10 g de butadiène par bouteille) est effectuée dans le MCH à 30° C et sous atmosphère inerte d'azote. On a utilisé un rapport massique « solvant de polymérisation (MCH) / monomère (Btd) » égal à 9 (ce rapport massique est appelé S/M ci-après).

La quantité de base catalytique en néodyme est de 1308 µmol pour 100 g de butadiène.

Le méthanol est utilisée selon un volume de 1 mL comme agent de stoppage de la réaction de polymérisation, et la N-1,3-diméthylbutyl-N'-phényl-p-phénylènediamine (6PPD) comme agent de protection (selon un volume de 1 ml à une concentration de 10 g.L-1 dans le cyclohexane, soit une masse de 0,02 g).

La mesure du taux de conversion du butadiène en polybutadiène en fonction du temps de réaction est utilisée pour décrire la cinétique de polymérisation.

La viscosité inhérente ηinh à 0,1 g.dL⁻¹ dans le toluène caractérise quant à elle la macrostructure de chaque polybutadiène obtenu.

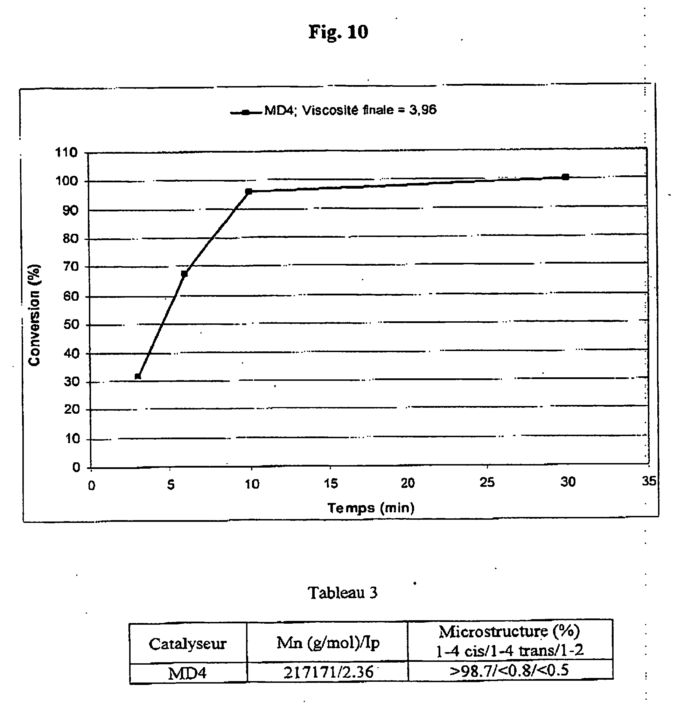

Les résultats sont consignés dans la Fig. 10 et le Tableau 3.

Cette courbe montre qu'un catalyseur de formule catalytique Nd/ butadiène/HDiBA/ CDEA = 1/30/1.3/2.7 préparé en continu selon l'invention présente une très bonne activité catalytique.

### Exemple VI:

### Préparation d'un système catalytique D2 selon un procédé discontinu et d'un système catalytique MD5 préparé selon le procédé continu conforme à l'invention de haut rapport HDiBA/Nd:

### 1) Préparation du système catalytique D2:

On a préparé un système catalytique D2 en suivant le procédé de préparation en discontinu décrit dans le document WO 03/097 708. A titre de réacteur de synthèse, c'est une bouteille "Steinie" de 250 mL qui est utilisée.

Ce système catalytique D2 présente la formule suivante, Nd/ butadiène/ HDiBA/CDEA = 1/30/12/2.7 et sa concentration est de 0.02 mol.L⁻¹.

A cet effet, on a introduit dans une bouteille "Steinie" de 250mL préalablement nettoyé de ses impuretés le sel de néodyme NdP₃ à l'état de poudre. On a soumis ensuite ce sel à un barbotage à l'azote pendant 10 min, puis on a mis en oeuvre les étapes successives suivantes :

### - Etape de mise en solution :

On a introduit dans la bouteille "Steinie" contenant le sel de néodyme NdP₃ un solvant constitué de méthylcyclohexane (MCH) en vue de la formation d'une solution gélatineuse. Le sel et le solvant sont laissés en contact durant une nuit à température ambiante.

### - Etape d'ajout du diène de préformation :

On a introduit ensuite du butadiène dans la bouteille "Steinie" à température ambiante.

### - Etape d'alkylation :

On a introduit ensuite dans la bouteille "Steinie" à température ambiante, du «HDiBA» à titre d'agent d'alkylation, selon une concentration d'environ 1 mol.L⁻¹. Le milieu réactionnel devient aussitôt fluide. La durée de l'alkylation est de 15 min.
La température de la réaction d'alkylation est de 30° C.

### - Etape d'halogénation :

On a introduit ensuite dans la bouteille "Steinie" du « CDEA », selon une concentration d'environ 0,5 mol.L⁻¹. La température du milieu réactionnel est alors portée à 60° C. L'élévation extrêmement rapide de température est liée à l'exothermie de la réaction, proportionnelle à la quantité de butadiène introduite dans le catalyseur et à l'absence de refroidissement notable et simultané par les parois de la bouteille "Steinie".

### - Etape de vieillissement :

On a procédé ensuite à un vieillissement du mélange ainsi obtenu en maintenant cette température de 60° C pendant une durée de 70 min.

On a refroidi et stocké finalement la solution catalytique obtenue sous atmosphère d'azote dans un congélateur, à la température de -15° C.

### 2) Préparation du systèmes catalytique MD5 selon l'invention :

Ce système catalytique a été préparé selon le procédé conforme à l'invention mise en oeuvre dans l'installation utilisée pour la préparation du système catalytique MD4 de l'exemple V, le réservoir (10) comportant en outre une troisième entrée (16) pour introduire, via un débitmètre, dans le réservoir de stockage (10) une partie du diène conjugué de préformation stocké dans le réservoir (24) et équipé d'une sortie (22) reliée à l'entrée (16) du réservoir. Le réacteur de mise en solution (10) est une cuve agitée par 3 mobiles équirépartis en hauteur et de 32,51 de volume. Les mélangeurs dynamiques de type parfaitement agité (30) et (40) respectivement destinés aux étapes d'alkylation et d'halogénation/vieillissement sont de volumes respectifs 0.49 1 et 2.78 1. Le débit de l'installation est de 2.381/h

On a préparé en continu sur ce procédé le système catalytique MD5, qui présente la formule catalytique Nd/ butadiène HDiBA/ CDEA = 1 / 30 / 12 / 2.7 et la concentration 0.04 mol.L⁻¹ en néodyme.

Plus précisément, on a préparé ces systèmes catalytiques en utilisant une solution de sel NdP₃ dans le MCH concentrée à 0.0972 mol.L⁻¹ préparée dans le réacteur (10) maintenu à 30°C, et en réalisant :
- dans le réacteur (10), l'ajout du diène de préformation à cette solution
- dans le mélangeur dynamique de type parfaitement agité (30), l'alkylation du mélange ainsi obtenu et maintenu à 30° C via du « HDiBA », pendant une durée de 15 min., la concentration utilisée en HDIBA est de 1 mol.L⁻¹; puis
- dans le mélangeur dynamique de type parfaitement agité (40), l'halogénation et le vieillissement du produit de la réaction d'alkylation via du « CDEA », à 60° C et pendant une durée de 70 min. La concentration utilisée en « CDEA » est de 0.785 mol.L⁻

On notera qu'il n'y a pas formation de gel ni d'encrassement dans l'installation.

### 3) Comparaison des systèmes catalytiques D2 et MDS en polymérisation du butadiène :

Les deux catalyseurs sont engagés dans des réactions de polymérisation du butadiène selon le mode opératoire rigoureusement identique à celui décrit dans l'exemple V. La quantité de base catalytique en néodyme est de 192µmol pour 100 g de butadiène pour D2 et de 231 µmol pour 100 g de butadiène pour MD5.

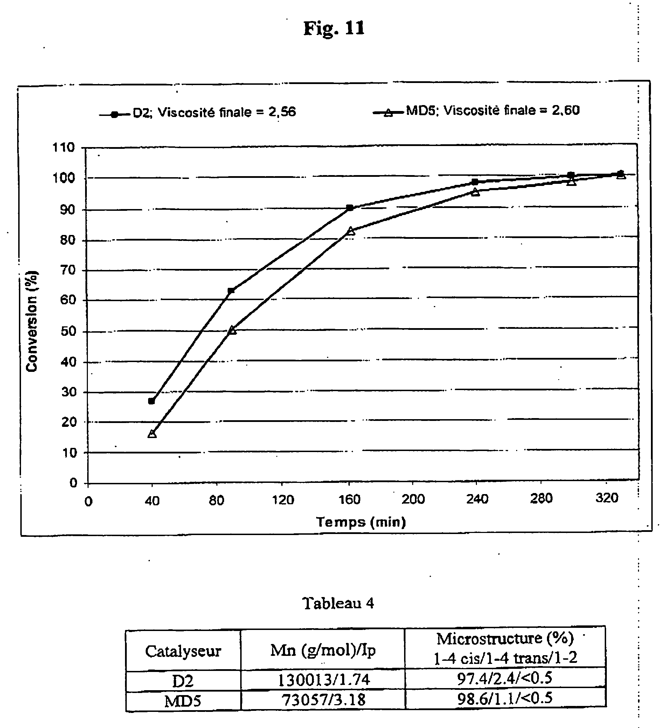

Les résultats sont consignés dans la Fig. 11 et le Tableau 4.

Ces courbes montrent que pour des catalyseurs de formule catalytique Nd/butadiène/ HDiBA/ CDEA = 1 / 30 / 12 / 2.7, il est possible d'avoir une activité équivalente à iso-viscosité finale du polymère avec un système catalytique préparé en continu selon l'invention et un système catalytique de même formule catalytique préparé en discontinu.

En regroupant les résultats du présent exemple avec ceux de l'exemple V, il apparaît que le rapport HDiHA/Nd des catalyseurs préparés en continu selon l'invention peut varier selon une large gamme.

### Exemple VII:

### Préparation d'un système catalytique MD6 préparé selon le procédé continu conforme à l'invention et comparaison au système catalytique MD7 de faible temps d'alkylation également préparé selon le procédé continu non conforme à l'invention :

### 1) Préparation du systèmes catalytique MD6 :

Ce système catalytique a été préparé selon le procédé conforme à l'invention mise en oeuvre dans l'installation utilisée pour la préparation du système catalytique MD5 de l'exemple V. Le réacteur de mise en solution (10) est une cuve agitée par 3 mobiles équirépartis en hauteur et de 32,5 1 de volume. Les mélangeurs dynamiques de type parfaitement agité (30) et (40) respectivement destinés aux étapes d'alkylation et d'halogénation/vieillissement sont de volumes respectifs 0.49 1 et 2.78 1. Le débit de l'installation est de 2.341/h

On a préparé en continu sur ce procédé le système catalytique MD6, qui présente la formule catalytique Nd/ butadiène/ HDiBA/ CDEA = 1/30/2/2.7 et la concentration 0.04 mol.L⁻¹ en néodyme.

Plus précisément, on a préparé ces systèmes catalytiques en utilisant une solution de sel NdP₃ dans le MCH concentrée à 0.057 mol.L⁻¹ préparée dans le réacteur (10) maintenu à 30°C, et en réalisant :
- dans le mélangeur dynamique de type parfaitement agité (30), l'ajout du diène de préformation à cette solution
- dans le mélangeur dynamique de type parfaitement agité (30), l'alkylation du mélange ainsi obtenu et maintenu à 30° C via du « HDIBA », pendant une durée de 15 min., la concentration utilisée en HDIBA est de 1 mol.L⁻¹; puis
- dans le mélangeur dynamique de type parfaitement agité (40), l'halogénation et le vieillissement du produit de la réaction d'alkylation via du « CDEA », à 60° C et pendant une durée de 70 min. La concentration utilisée en « CDEA » est de 0.785 mol.L⁻¹.

On notera qu'il n'y a pas formation de gel ni d'encrassement dans l'installation.

### 2) Préparation du système catalytique MD7 :

Ce système catalytique a été préparé selon le procédé non conforme à l'invention mise en oeuvre dans l'installation utilisée pour la préparation du système catalytique MD5 de l'exemple V. Le réacteur de mise en solution (10) est une cuve agitée par 3 mobiles équirépartis en hauteur et de 32,5 1 de volume. Les mélangeurs dynamiques de type parfaitement agité (30) et (40) respectivement destinés aux étapes d'alkylation et d'halogénation/vieillissement sont de volumes respectifs 0.49 1 et 2.78 1. Le débit de l'installation est de 11.1 l/h

On a préparé en continu sur ce procédé le système catalytique MD7, qui présente la formule catalytique Nd/ butadiène/ HDiBA/ CDEA = 1 / 30 / 2 / 2.7 et la concentration 0.04 mol.L⁻¹ en néodyme.

Plus précisément, on a préparé ces systèmes catalytiques en utilisant une solution de sel NdP₃ dans le MCH concentrée à 0.0508 mol.L⁻¹ préparée dans le réacteur (10) maintenu à 30°C, et en réalisant :
- dans le réacteur de mise en solution (10), l'ajout du diène de préformation à cette solution
- dans le mélangeur dynamique de type parfaitement agité (30), l'alkylation du mélange ainsi obtenu et maintenu à 30° C via du « HDiBA », pendant une durée de 3 min., la concentration utilisée en HDIBA est de 1 mol.L⁻¹; puis
- dans le mélangeur dynamique de type parfaitement agité (40), l'halogénation et le vieillissement du produit de la réaction d'alkylation via du «CDEA », à 60° C et pendant une durée de 15 min. La concentration utilisée en « CDEA » est de 0.785 mol.L⁻¹.

On notera qu'il n'y a pas formation de gel ni d'encrassement dans l'installation.

### 2) Comparaison des systèmes catalytiques MD6 et MD7 en polymérisation du butadiène :

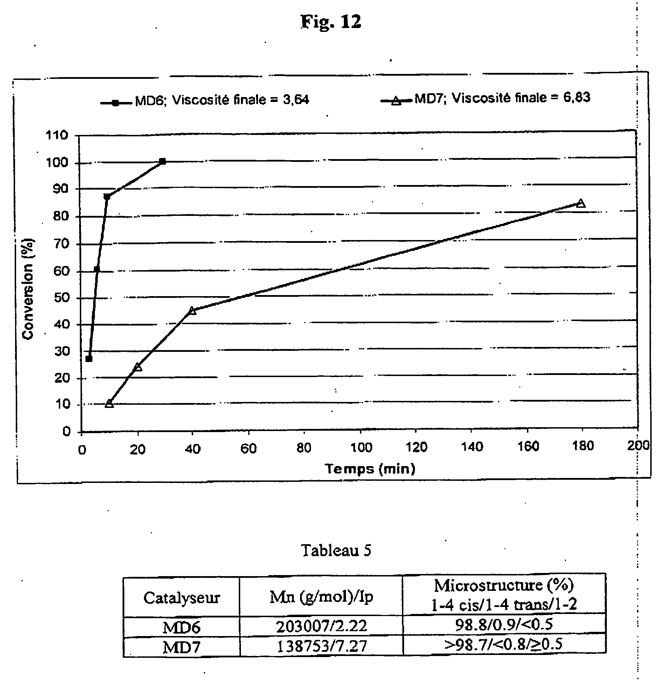

Les deux catalyseurs sont engagés dans des réactions de polymérisation du butadiène selon le mode opératoire rigoureusement identique à celui décrit dans l'exemple V. La quantité de base catalytique en néodyme est de 846µmol pour 100 g de butadiène. Les résultats sont consignés dans la Fig. 12 et le Tableau 5.

Ces courbes montrent que pour une même quantité de base catalytique en néodyme mise en jeu en polymérisation, le système catalytique MD7 alkylé 3 min présente une activité catalytique très inférieure à celle du système catalytique MD6 préparé selon l'invention. Les caractéristiques macrostructurales du polymère obtenu avec le système catalytique MD7 sont également très dégradées : l'indice de polydispersité est très élevé. Elles sont rédhibitoires quant à une application pour la fabrication d'enveloppes de pneumatiques.

On notera enfin que le système catalytique MD7 est hétérogène en présentant notamment beaucoup de dépôt. Ceci est également rédhibitoire quant à une application industrielle puisque cette phase insoluble pourrait générer des bouchages du procédé de fabrication.

### Exemple VIII :

### Préparation d'un système catalytique D3 selon un procédé discontinu et comparaison en poymérisation de l'isoprène au système catalytique MD6 préparé selon le procédé continu conforme à l'invention:

### 1) Préparation du système catalytique D3 :

On a préparé un système catalytique D3 en suivant le procédé de préparation en discontinu décrit dans le document précité WO 02/38636.

Ce système catalytique D3 présente la formule suivante, Nd/ butadiène/ HDiBA/ CDEA = 1 /30/2/2.7 et sa concentration est de 0.02 mol.L⁻¹.

A cet effet, on a versé un solvant constitué de méthylcyclohexane (MCH) dans un réacteur discontinu de 25 L préalablement nettoyé de ses impuretés. On a soumis ensuite ce solvant à un barbotage à l'azote pendant 3 min, puis on a mis en oeuvre les étapes successives suivantes :

### - Etape de mise en solution :

On a introduit dans le réacteur contenant le solvant le sel de néodyme NdP₃ à l'état de poudre en vue de la formation d'une solution gélatineuse, la durée et la température de mise en contact de ce solvant et du sel après un nouveau barbotage de 3 minutes sont respectivement de 30 minutes et de 30° C.

### - Etape d'ajout du diène de préformation :

On a introduit ensuite du butadiène dans ce réacteur à une température de 30° C.

### - Etape d'alkylation :

On a introduit ensuite dans ce réacteur maintenu à 30 °C, du « HDiBA » à titre d'agent d'alkylation, selon une concentration d'environ 1 mol.L⁻¹. Le milieu réactionnel devient aussitôt fluide. La durée de alkylation est de 15 min.
La température de la réaction d'alkylation était de 30° C.

### - Etape d'halogénation :

On a introduit ensuite dans ce réacteur du « CDEA », selon une concentration d'environ 0.5 mol.L⁻¹. La température du milieu réactionnel est alors portée à 60° C. L'élévation extrêmement rapide de température est liée à l'exothermie de la réaction, proportionnelle à la quantité de butadiène introduite dans le catalyseur et à l'absence de refroidissement notable et simultané par les parois du réacteur.

### - Etape de vieillissement :

On a procédé ensuite à un vieillissement du mélange ainsi obtenu en maintenant cette température de 60° C pendant une durée de 70 min.

On a refroidi et stocké finalement la solution catalytique obtenue sous atmosphère d'azote dans un congélateur, à la température de -15° C.

### 2) Comparaison des systèmes catalytiques D3 et MD6 en polymérisation de l'isoprène:

A titre de réacteur de polymérisation, une bouteille "Steinie" de 250 mL est utilisée. L'étanchéité de la bouteille est assurée par un ensemble de type "joint-capsule percée" permettant ainsi l'ajout de chaque système catalytique à l'aide d'une seringue. Chaque réaction de polymérisation est mise en oeuvre en soumettant cette bouteille préalablement lavée et séchée à une agitation dans un bac à eau thermostaté. Chaque réaction de polymérisation de l'isoprène (on utilise 10 g d'isoprène par bouteille) est effectuée dans le MCH à 30° C et sous atmosphère inerte d'azote. On a utilisé un rapport massique « solvant de polymérisation (MCH) / monomère (Isop) » égal à 9 (ce rapport massique est appelé S/M ci-après).

La quantité de base catalytique en néodyme est de 392µmol pour 100 g de butadiène pour D3 et de 471µmol pour 100 g de butadiène pour MD6.

Le méthanol est utilisée selon un volume de 1 mL comme agent de stoppage de la réaction de polymérisation, et la N-1,3-diméthylbutyl-N'-phényl-p-phénylènediamine (6PPD) comme agent de protection (selon un volume de 1 ml à une concentration de 10 g.L⁻¹ dans le cyclohexane, soit une masse de 0,02, g).

La mesure du taux de conversion de l'isoprène en polyisoprène en fonction du temps de réaction est utilisée pour décrire la cinétique de polymérisation.

La viscosité inhérente ηinh à 0,1 g.dL⁻¹ dans le toluène caractérise quant à elle la microstructure de chaque polybutadiène obtenu.

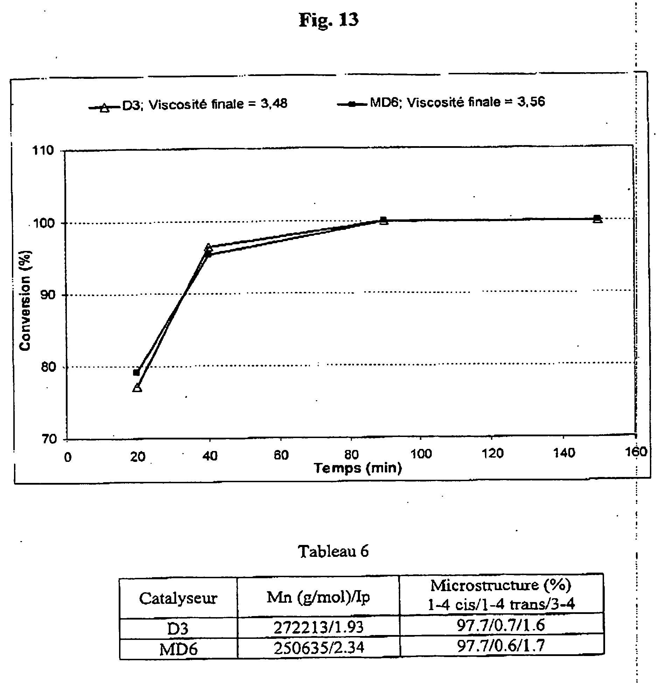

Les résultats sont reportés dans la Fig. 13 et le Tableau 6.

Ces courbes montrent qu'en polymérisation de l'isoprène on retrouve une activité catalytique et des caractéristiques macrostructurales et microstructurales équivalentes entre un système catalytique préparé en continu selon l'invention et un système catalytique préparé en discontinu.

### ANNEXE 1 : Détermination de la microstructure des polybutadiènes et polyisoprènes obtenus.

On a utilisé la technique de dosage appelée « proche infrarouge » (NIR). II s'agit d'une méthode indirecte faisant appel à des élastomères « témoin » dont la microstructure a été mesurée par la technique de RMN13C. On utilise la relation quantitative (loi de Beer-Lambert) existant entre la répartition des monomères dans un élastomère et la forme du spectre NIR de celui-ci. Cette technique est mise en oeuvre en deux étapes :
1) Etalonnage :
   - On procède à l'acquisition des spectres respectifs des élastomères « témoin ».
   - On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :
      (1) P. GELADI et B. R. KOWALSKI « Partial Least Squares régression : a tutorial », Analytica Chimica Acta, vol. 185, 1-17 (1986).
      (2) M. TENENHAUS « La régression PLS - Théorie et pratique » Paris, Editions Technip (1998).
2) Mesure :
   - On procède à un enregistrement du spectre de l'échantillon.
   - On réalise le calcul de la microstructure.

### ANNEXE 2 : Détermination de la distribution des masses molaires des polybutadiènes obtenus par la technique de chromatographie d'exclusion stérique (SEC).

### a) Principe de la mesure:

La chromatographie d'exclusion stérique ou SEC (size exclusion chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

### b) Préparation du polymère:

Il n'y a pas de traitement particulier de l'échantillon de polymère avant analyse. Celui-ci est simplement solubilisé dans du tétrahydrofurane à une concentration d'environ 1 g/l.

### c) Analyse SEC:

Cas c1) L'appareillage utilisé est une chaîne chromatographique « WATERS alliance ». Le solvant d'élution est le tétrahydrofurane, le débit de 1 m/min., la température du système de 35° C et la durée d'analyse de 30 min. On utilise un jeu de deux colonnes WATERS de dénomination commerciale « STYRAGEL HT6E ».

Le volume injecté de la solution de l'échantillon de polymère est 100 µl. Le détecteur est un réfractomètre différentiel « WATERS 2140 » et le logiciel d'exploitation des données chromatographiques est le système «WATERS MILLENIUM ».

Cas c2 L'appareillage utilisé est un chromatographe « WATERS alliance ». Le solvant d'élution est le tétrahydrofurane, le débit de 0,7 ml/mn, la température du système de 35°C et la durée d'analyse de 90 min. On utilise un jeu de quatre colonnes WATERS en série, de dénominations commerciales «STYRAGEL HMW7», « STYRAGEL HMW6E » et deux « STYRAGEL HT6E ».

Le volume injecté de la solution de l'échantillon de polymère est 100 µl. Le détecteur est un réfractomètre différentiel « WATERS modèle RI32X » et le logiciel d'exploitation des données chromatographiques est le système « WATERS MILLENNIUM ».

Dans les deux cas, les masses molaires moyennes calculées sont relatives à une courbes d'étalonnage réalisées pour des polybutadiènes de microstructure suivante 11 % massique de motifs type 1-2 et 48 % massique de motifs type 1-4 trans.

## Revendications

1. Procédé de préparation en continu d'un système catalytique utilisable pour la polymérisation d'au moins un monomère diène conjugué, ledit système catalytique étant à base d'au moins :
- un diène conjugué de préformation,
- un sel d'un ou plusieurs métaux de terre(s) rare(s) d'un acide phosphorique organique, ledit sel étant en solution dans au moins un solvant hydrocarboné inerte et saturé de type aliphatique ou alicyclique,
- un agent d'alkylation comprenant un alkylaluminium de formulé AlR₃ ou HAlR_{2,} dans lesquelles R représente un radical alcoyle, préférentiellement de 1 à 10 atomes de carbone et H représente l'atome d'hydrogène, et
- un donneur d'halogène comprenant un halogénure d'alkylaluminium,
**caractérisé en ce qu'**il comprend successivement dans une ligne (L) :
(i) une réaction d'alkylation entre le diène conjugué de préformation, avec la solution du sel de terre(s) rare(s) et l'agent d'alkylation, et la conduite de la réaction d'alkylation pendant une durée caractéristique minimale d'au moins 5 minutes dans un réacteur d'alkylation (30) constitué par au moins un mélangeur dynamique de type parfaitement agité,
(ii) un ajout au mélange obtenu en (i) dudit donneur d'halogène, pour la conduite d'une réaction d'halogénation-vieillissement du système catalytique préformé et l'obtention en continu dudit système catalytique préformé en sortie de ladite ligne (L).

2. Procédé selon la revendication 1, **caractérisé en ce que** la totalité du diène conjugué de préformation, de la solution de terre(s) rare(s) et de l'agent d'alkylation est introduite directement dans le réacteur d'alkylation

3. Procédé selon la revendication 1, **caractérisé en ce qu'**il comprend, antérieurement à l'étape (i), une mise en contact dudit ou desdits solvant(s) et dudit sel dans un réacteur de mise en solution (10).

4. Procédé selon la revendication 3, **caractérisé en ce qu'**il comprend une introduction dans ledit réacteur (10) de la totalité ou d'une partie du diène conjugué de préformation.

5. Procédé selon la revendication 3, **caractérisé en ce que** la solution de sel de terre(s) rare(s) évacuée du réacteur de mise en solution, (10) est ensuite mise en contact dans la ligne (L) avec la totalité ou une partie du diène conjugué de préformation.

6. Procédé selon la revendication 5, **caractérisé en ce qu'**il comprend une introduction dans un mélangeur dynamique de type parfaitement agité (20) de la totalité ou d'une partie du diène conjugué de préformation.

7. Procédé selon une des revendications 1 à 6, **caractérisé en ce que** la solution de sel de terre(s) rare(s) est diluée dans la ligne (L).

8. Procédé selon la revendication 7, **caractérisé en ce qu'**il comprend, antérieurement à l'étape (i), une mise en contact en continu et sous agitation dans la ligne (L) dudit sel de terre(s) rare(s) préparé directement dans le solvant avec ledit diène conjugué de préformation à une température contrôlée allant de 10°C à 60°C.

9. Procédé selon une des revendications 1 à 8, **caractérisé en ce que** l'étape (i) est réalisée à une température contrôlée allant de 25°C à 80° C et pendant une durée caractéristique allant de 10 à 60 minutes.

10. Procédé selon la revendication 9, **caractérisé en ce qu'**il comprend, un réglage du temps de séjour caractéristique dudit agent alkylation dans ladite ligne (L), avant ajout dudit donneur d'halogène.

11. Procédé selon la revendication 9 ou 10, **caractérisé en ce que** le donneur d'halogène est introduit dans la ligne (L) avant le réacteur d'halogénation-vieillissement.

12. Procédé selon une des revendications 9 à 11, **caractérisé en ce qu'**il comprend, suite à l'étape (i), une mise en contact en continu dans le réacteur d'halogénation-vieillissement du produit de ladite réaction d'alkylation avec ledit donneur d'halogène, à une température contrôlée allant de 44°C. à 80° C et pendant une durée allant de 10 minutes à 2 heures.

13. Installation pour la mise en oeuvre d'un procédé selon une des revendications précédentes 1 à 12, **caractérisée en ce qu'**elle comporte essentiellement :
(i) un réacteur continu d'alkylation (30) qui consiste en un ou plusieurs, (n) mélangeur(s) dynamique(s) de type parfaitement agité(s) et continu d'alkylation ;
(ii) un réacteur continu d'halogénation-vieillissement (40) qui comporte un ou plusieurs, (n'), mélangeur(s) dynamique(s) de type parfaitement agités(s) et, optionnellement, un ou plusieurs, (n"'), réacteur(s) tubulaire(s) à écoulement piston, relié(s) à la sortie de la ligne (L),
(n) et (n') étant un nombre entier supérieur à 0 et n" étant égal à 0 ou un nombre entier supérieur à 0.

14. Installation selon la revendication 13, **caractérisée en ce que** le réacteur d'halogénaton-vieillissement (40) comprend au moins un mélangeur dynamique de type parfaitement agité et au moins un réacteur tubulaire à écoulement piston disposant ou non d'une agitation de type statique ou dynamique.

15. Installation selon la revendication 13 ou 14, **caractérisée en ce que** le réacteur d'alkylation (30) est relié à une ou plusieurs source(s) d'alimentation en solvant(s), sel de terre(s) rare(s) en solution, agent d'alkylation.

16. Installation selon une des revendications 13 à 15, **caractérisée en ce qu'**elle comporte, en amont de la ligne (L), un réacteur de mise en solution d'un sel d'un ou plusieurs métaux de terre(s) rare(s) d'un acide phosphorique (10) qui est pourvu :
- d'une première entrée (11) adaptée pour amener dans ledit réacteur au moins un solvant hydrocarboné inerte et saturé de type aliphatique ou alicyclique,
- d'une seconde entrée (14) adaptée pour amener dans ledit réacteur un sel d'un ou plusieurs métaux de terre(s) rare(s) d'un acide phosphorique organique,
- d'une sortie (17) adaptée pour amener dudit réacteur une solution dudit sel dans le(s)dit(s) solvant(s) en entrée de ligne (L).

17. Installation selon une des revendications 13 à 16, **caractérisée en ce qu'**elle comporte en outre un mélangeur dynamique de type parfaitement agité et continu d'addition du diène conjugué de préformation (20) qui est pourvu :
- d'une première entrée (21) qui est reliée à un réservoir (10) contenant le sel de terre(s) rare(s) en solution et qui est adaptée pour amener ladite solution dans ledit mélangeur (20),
- d'une seconde entrée (23) qui est reliée à un réservoir (24) contenant un diène conjugué de préformation et qui est adaptée pour amener ledit diène conjugué dans ledit mélangeur (20), et
- d'une sortie (25) adaptée pour amener le mélange de ladite solution et dudit diène conjugué de préformation vers un réacteur d'alkylation (30) ;

18. Installation selon une des revendications 13 à 17, **caractérisée en ce qu'**elle comporte en outre, en aval de ladite ligne (L), au moins un réacteur continu de polymérisation qui est adapté pour polymériser en continu au moins un monomère diène conjugué en étant alimenté en continu par ladite ligne (L).

19. Procédé de préparation en continu d'un polymère d'au moins un diène conjugué à l'aide d'un système catalytique préparé en continu au moyen du procédé de préparation continu du système catalytique, selon l'une des revendications 1 à 12.

## Claims

1. Process for the continuous preparation of a catalytic system that can be used for the polymerization of at least one conjugated diene monomer, said catalytic system being based on at least:
- a preforming conjugated diene;
- an organic phosphoric acid salt of one or more rare-earth metal(s), said salt being in solution in at least one saturated aliphatic or alicyclic and inert hydrocarbon-based solvent;
- an alkylating agent comprising an alkylaluminium having the formula AlR₃ or HAlR₂, in which R represents an alkyl radical, preferably of 1 to 10 carbon atoms, and H represents a hydrogen atom; and
- a halogen donor comprising an alkylaluminium halide;
**characterized in that** it comprises successively in one line (L):
(i) an alkylation reaction between the preforming conjugated diene, with the solution of the salt of rare-earth element(s) and the alkylating agent, with the alkylation reaction being carried out for a characteristic minimum period of at least 5 minutes in an alkylation reactor (30) composed of at least one well-mixed dynamic mixer;
(ii) the addition of said halogen donor to the mixture obtained in (i), in order to produce a reaction for the halogenation-ageing of the preformed catalytic system and to continuously produce said preformed catalytic system at the outlet of said line (L).

2. Process according to Claim 1, **characterized in that** all of the preforming conjugated diene, of the solution of rare-earth element(s) and of the alkylating agent is introduced directly into the alkylation reactor.

3. Process according to Claim 1, **characterized in that** it comprises, prior to step (i), bringing said solvent(s) and said salt into contact in a solubilization reactor (10).

4. Process according to Claim 3, **characterized in that** it comprises introducing all or a part of the preforming conjugated diene into said reactor (10).

5. Process according to Claim 3, **characterized in that** the solution of the salt of rare-earth element(s) evacuated from the solubilization reactor (10) is subsequently brought into contact, in the line (L), with all or a part of the preforming conjugated diene.

6. Process according to Claim 5, **characterized in that** it comprises introducing all or a part of the preforming conjugated diene into a well-mixed dynamic mixer (20).

7. Process according to one of Claims 1 to 6, **characterized in that** the solution of the salt of rare-earth element(s) is diluted in the line (L).

8. Process according to Claim 7, **characterized in that** it comprises, prior to step (i), continuously bringing into contact, with mixing in the line (L), said salt of rare-earth element(s) prepared directly in the solvent with said preforming conjugated diene at a controlled temperature ranging from 10°C to 60°C.

9. Process according to one of Claims 1 to 8, **characterized in that** step (i) is carried out at a controlled temperature ranging from 25°C to 80°C and for a characteristic period ranging from 10 to 60 minutes.

10. Process according to Claim 9, **characterized in that** it comprises controlling the characteristic residence time of said alkylating agent into said line (L), before adding said halogen donor.

11. Process according to one either Claims 9 or 10, **characterized in that** the halogen donor is introduced into the line (L) before the halogenation-ageing reactor.

12. Process according to one of Claims 9 to 11, **characterized in that** it comprises, following step (i), continuously bringing into contact, in the halogenation-ageing reactor, the product of said alkylation reaction with said halogen donor, at a controlled temperature ranging from 40°C to 80°C and for a period ranging from 10 minutes to 2 hours.

13. Installation for implementing a process according to one of the preceding Claims 1 to 12, **characterized in that** it comprises essentially:
(i) a continuous alkylation reactor (30) which is composed of one or more, (n), continuous alkylation, well-mixed dynamic mixer(s);
(ii) a continuous halogenation-ageing reactor (40) which comprises one or more, (n'), well-mixed dynamic mixer(s) and, optionally, one or more, (n"), plug-flow tubular reactor(s), connected to the outlet of the line (L),
(n) and (n') being an integer greater than 0 and n" being equal to 0 or an integer greater than 0.

14. Installation according to Claim 13, **characterized in that** the halogenation-ageing reactor (40) comprises at least one well-mixed dynamic mixer and at least one plug-flow tubular reactor, which may or may not have static- or dynamic-type mixing.

15. Installation according to either of Claims 13 or 14, **characterized in that** the alkylation reactor (30) is connected to one or more source(s) of feed of solvent(s), salt of rare-earth element(s) in solution, alkylating agent.

16. Installation according to one of Claims 13 to 15, **characterized in that** it comprises, upstream of the line (L), a reactor (10) for solubilizing a phosphoric acid salt of one or more rare-earth metal(s), which is provided:
- with a first inlet (11) suitable for bringing at least one saturated and aliphatic or alicyclic, and inert hydrocarbon-based solvent into said reactor;
- with a second inlet (14) suitable for bringing an organic phosphoric acid salt of one or more rare-earth metal(s) into said reactor;
- with an outlet (17) suitable for bringing a solution of said salt in said solvent(s) from said reactor to the inlet of line (L).

17. Installation according to one of Claims 13 to 16, **characterized in that** it also comprises a continuous, well-mixed dynamic mixer for addition of the preforming conjugated diene (20), which is provided:
- with a first inlet (21) which is connected to a reservoir (10) containing the salt of rare-earth element(s) in solution and which is suitable for bringing said solution into said mixer (20);
- with a second inlet (23) which is connected to a reservoir (24) containing a preforming conjugated diene and which is suitable for bringing said conjugated diene into said mixer (20); and
- with an outlet (25) suitable for bringing the mixture of said solution and of said preforming conjugated diene to an alkylation reactor (30).

18. Installation according to one of Claims 13 to 17, **characterized in that** it also comprises, downstream of said line (L), at least one continuous polymerization reactor which is suitable for continuously polymerizing at least one conjugated diene monomer by being continuously fed by said line (L).

19. Process for the continuous preparation of a polymer of at least one conjugated diene using a catalytic system prepared continuously by means of the process for the continuous preparation of the catalytic system, according to one of Claims 1 to 12.

## Patentansprüche

1. Verfahren zur kontinuierlichen Herstellung eines Katalysatorsystems, das für die Polymerisation mindestens eines konjugierten Dien-Monomers verwendet werden kann, wobei das Katalysatorsystem mindestens auf Folgendem basiert:
- einer konjugierten Dien-Vorstufe,
- einem Salz, das ein oder mehrere Seltenerdmetall(e) mit einer organischen Phosphorsäure bildet/bilden, wobei das Salz in Lösung in mindestens einem inerten und gesättigten Kohlenwasserstoff-Lösemittel aliphatischer oder alicyclischer Art vorliegt,
- einem Alkylierungsmittel, das ein Alkylaluminium der Formel AlR₃ oder HAlR₂ umfasst, bei welchen R für einen Alkylrest, vorzugsweise mit 1 bis 10 Kohlenstoffatomen steht und H für das Wasserstoffatom steht,
und
- einem Halogen-Donator, der ein Alkylaluminiumhalogenid umfasst,
**dadurch gekennzeichnet, dass** es nacheinander in einer Linie (L) Folgendes umfasst:
(i) eine Alkylierungsreaktion zwischen der konjugierten Dien-Vorstufe mit der Lösung des/der Seltenerdsalze(s) und dem Alkylierungsmittel sowie die Durchführung der Alkylierungsreaktion über eine kennzeichnende Minimaldauer von mindestens 5 Minuten in einem Alkylierungsreaktor (30), der aus mindestens einer dynamischen Mischvorrichtung mit einem lückenlos arbeitenden Rührwerk besteht,
(ii) einen Zusatz des Halogen-Donators zur Mischung, die in (i) erhalten wurde, um eine Halogenierungs-/Alterungsreaktion der Katalysatorsystem-Vorstufe durchzuführen und am Ausgang der Linie (L) kontinuierlich die Katalysatorsystem-Vorstufe zu erhalten.

2. Verfahren nach Anspruch 1, **dadurch gekennzeichnet, dass** die Gesamtheit der konjugierten Dien-Vorstufe, der Seltenerdlösung(en) und des Alkylierungsmittels direkt in den Alkylierungsreaktor gegeben wird.

3. Verfahren nach Anspruch 1, **dadurch gekennzeichnet, dass** es, vor dem Schritt (i), ein Inkontaktbringen des/der Lösemittel(s) und des Salzes in einem Reaktor zum Inlösungbringen (10) umfasst.

4. Verfahren nach Anspruch 3, **dadurch gekennzeichnet, dass** es ein Beschicken des Reaktors (10) mit der Gesamtheit oder mit einer Teilmenge der konjugierten Dien-Vorstufe umfasst.

5. Verfahren nach Anspruch 3, **dadurch gekennzeichnet, dass** die Seltenerdsalzlösung(en), die aus dem Reaktor zum Inlösungbringen (10) entnommen wird/werden, anschließend in der Linie (L) mit der Gesamtheit oder mit einer Teilmenge der konjugierten Dien-Vorstufe in Kontakt gebracht wird/werden.

6. Verfahren nach Anspruch 5, **dadurch gekennzeichnet, dass** es ein Beschicken einer dynamischen Mischvorrichtung, die mit einem lückenlos arbeitenden Rührwerk (20) versehen ist, mit der Gesamtheit oder mit einer Teilmenge der konjugierten Dien-Vorstufe umfasst.

7. Verfahren nach einem der Ansprüche 1 bis 6, **dadurch gekennzeichnet, dass** die Seltenerdsalzlösung(en) in der Linie (L) verdünnt wird/werden.

8. Verfahren nach Anspruch 7, **dadurch gekennzeichnet, dass** es, vor dem Schritt (i), ein kontinuierlich und unter Rühren in der Linie (L) betriebenes Inkontaktbringen des/der direkt in dem Lösemittel hergestellten Seltenerdsalze(s) mit der konjugierten Dien-Vorstufe bei einer kontrollierten Temperatur im Bereich von 10 °C bis 60 °C umfasst.

9. Verfahren nach einem der Ansprüche 1 bis 8, **dadurch gekennzeichnet, dass** der Schritt (i) bei einer kontrollierten Temperatur im Bereich von 25 °C bis 80 °C und über eine kennzeichnende Dauer im Bereich von 10 bis 60 Minuten durchgeführt wird.

10. Verfahren nach Anspruch 9, **dadurch gekennzeichnet, dass** es ein Einstellen der kennzeichnenden Dauer umfasst, während derer das Alkylierungsmittel in der Linie (L) verweilt, bevor der Halogen-Donator zugesetzt wird.

11. Verfahren nach Anspruch 9 oder 10, **dadurch gekennzeichnet, dass** der Halogen-Donator vor dem Halogenierungs-/Alterungsreaktor in die Linie (L) eingeleitet wird.

12. Verfahren nach einem der Ansprüche 9 bis 11, **dadurch gekennzeichnet, dass** es nach dem Schritt (i) ein kontinuierliches Inkontaktbringen des Produkts der Alkylierungsreaktion mit dem Halogen-Donator im Halogenierungs-/Alterungsreaktor umfasst, bei einer kontrollierten Temperatur im Bereich von 40 °C bis 80 °C und während einer Dauer im Bereich von 10 Minuten bis 2 Stunden.

13. Anlage zur Durchführung eines Verfahrens nach einem der vorhergehenden Ansprüche 1 bis 12, **dadurch gekennzeichnet, dass** sie im Wesentlichen Folgendes aufweist:
(i) einen kontinuierlichen Alkylierungsreaktor (30), der aus einer oder mehreren (n) dynamischen Mischvorrichtung(en) mit einem lückenlos arbeitenden Rührwerk und kontinuierlichem Betrieb für die Alkylierung besteht;
(ii) einen kontinuierlichen Halogenierungs-/Alterungsreaktor (40), der eine oder mehrere (n') dynamische Mischvorrichtung(en) mit einem lückenlos arbeitenden Rührwerk aufweist sowie möglicherweise einen oder mehrere (n") Rohrreaktor(en) mit Kolbenströmung, der/die mit der Ausgangsöffnung der Linie (L) verbunden ist/sind,
wobei (n) und (n') eine ganze Zahl größer als 0 sind und n" gleich 0 oder einer ganzen Zahl größer als 0 ist.

14. Anlage nach Anspruch 13, **dadurch gekennzeichnet, dass** der Halogenierungs-/Alterungsreaktor (40) mindestens eine dynamische Mischvorrichtung mit einem lückenlos arbeitenden Rührwerk umfasst sowie mindestens einen Rohrreaktor mit Kolbenströmung, der über eine statische oder dynamische Rührvorrichtung verfügt oder nicht.

15. Anlage nach Anspruch 13 oder 14, **dadurch gekennzeichnet, dass** der Alkylierungsreaktor (30) mit einer oder mehreren Quelle(n) zur Versorgung mit Lösemittel(n), Seltenerdsalz(en) in Lösung, Alkylierungsmittel verbunden ist.

16. Anlage nach einem der Ansprüche 13 bis 15, **dadurch gekennzeichnet, dass** sie stromaufwärts der Linie (L) einen Reaktor (10) aufweist, der dazu dient, ein Salz, das ein oder mehrere Seltenerdmetall(e) mit einer Phosphorsäure (10) bildet/bilden, in Lösung zu bringen, wobei er mit Folgendem versehen ist:
- einer ersten Eingangsöffnung (11), die dafür ausgelegt ist, den Reaktor mit mindestens einem inerten und gesättigten Kohlenwasserstoff-Lösemittel aliphatischer oder alicyclischer Art zu beschicken,
- einer zweiten Eingangsöffnung (14), die dafür ausgelegt ist, den Reaktor mit einem Salz, das ein oder mehrere Seltenerdmetall(e) mit einer organischen Phosphorsäure bildet, zu beschicken,
- einer Ausgangsöffnung (17), die dafür ausgelegt ist, eine Lösung des Salzes in dem/den Lösemittel(n) vom Reaktor der Eingangsöffnung der Linie (L) zuzuführen.

17. Anlage nach einem der Ansprüche 13 bis 16, **dadurch gekennzeichnet, dass** sie darüber hinaus eine dynamische Mischvorrichtung mit einem lückenlos arbeitenden Rührwerk und kontinuierlichem Betrieb (20) aufweist, um die konjugierte Dien-Vorstufe zuzusetzen, wobei sie mit Folgendem versehen ist:
- einer ersten Eingangsöffnung (21), die mit einem Vorratsbehälter (10) verbunden ist, welcher das/die Seltenerdsalz(e) in Lösung enthält, und die dafür ausgelegt ist, die Lösung der Mischvorrichtung (20) zuzuführen,
- einer zweiten Eingangsöffnung (23), die mit einem Vorratsbehälter (24) versehen ist, welcher eine konjugierte Dien-Vorstufe enthält, und die dafür ausgelegt ist, das konjugierte Dien der Mischvorrichtung (20) zuzuführen, und
- einer Ausgangsöffnung (25), die dafür ausgelegt ist, die Mischung aus der Lösung und der konjugierten Dien-Vorstufe einem Alkylierungsreaktor (30) zuzuführen;

18. Anlage nach einem der Ansprüche 13 bis 17, **dadurch gekennzeichnet, dass** sie darüber hinaus, stromabwärts der Linie (L), mindestens einen kontinuierlichen Polymerisationsreaktor aufweist, der dafür ausgelegt ist, mindestens ein konjugiertes Dien-Monomer kontinuierlich zu polymerisieren, wobei er kontinuierlich von der Linie (L) gespeist wird.

19. Verfahren zur kontinuierlichen Herstellung eines Polymers aus mindestens einem konjugierten Dien, mit Hilfe eines katalytischen Systems, das kontinuierlich mittels des kontinuierlichen Verfahrens zur Herstellung des katalytischen Systems nach einem der Ansprüche 1 bis 12 hergestellt wird.
